# EUROPÄISCHE PATENTSCHRIFT

(11) **EP 3 106 376 B1**
(45) Veröffentlichungstag und Bekanntmachung des Hinweises auf die Patenterteilung: **12.09.2018**
(21) Anmeldenummer: 16172655.9
(22) Anmeldetag: 02.06.2016
(51) Int. Cl.: B62H 5/00, B62J 11/00

(54) **HALTERUNG FÜR EIN ZWEIRAD-SCHLOSS**
MOUNT FOR A TWO-WHEELER LOCK
FIXATION POUR UN ANTIVOL DE DEUX-ROUES

(30) Priorität: 19.06.2015 DE 102015109860
(43) Veröffentlichungstag der Anmeldung: 21.12.2016
(73) Patentinhaber: ABUS August Bremicker Söhne KG, 58300 Wetter-Volmarstein (DE)
(72) Erfinder:
(74) Vertreter: Manitz Finsterwald Patentanwälte PartmbB

(56) Entgegenhaltungen:
- US-A- 4 966 382

## Beschreibung

Die vorliegende Erfindung betrifft eine Halterung für ein Zweiradschloss, insbesondere vom Typ eines Gelenkschlosses, mit einem Stützbereich zum Anliegen an einem Rohrabschnitt eines Zweirads, und einem Halter, welcher zumindest einen ersten Halteabschnitt und einen zweiten Halteabschnitt umfasst, wobei der erste Halteabschnitt und der zweite Halteabschnitt beabstandet voneinander sind und eine Aufnahmeöffnung für das Zweirad-Schloss definieren, wobei der erste Halteabschnitt mit dem zweiten Halteabschnitt einen Winkel einschließt, wobei der Winkel zwischen dem ersten Halteabschnitt und dem zweiten Halteabschnitt veränderbar ist, wobei die Halterung eine Arretiereinrichtung aufweist, die zwischen dem ersten Halteabschnitt und dem zweiten Halteabschnitt des Halters wirksam ist und die einen Spannhebel aufweist, der zwischen einer Fixierstellung und einer Entnahmestellung bewegbar ist, und wobei durch Bewegen des Spannhebels aus der Entnahmestellung in die Fixierstellung das in der Aufnahmeöffnung befindliche Zweirad-Schloss mittels Klemmung fixierbar ist.

Halterungen für Zweiradschlösser sind beispielsweise aus der US5833188, DE102012214211A1 und DE102013102009A1 bekannt und werden benötigt, um Zweirad-Schlösser dauerhaft oder temporär - beispielsweise während einer Fahrt - an dem Zweirad zu befestigen. Bevorzugt kann die Halterung zu diesem Zweck dauerhaft an dem Zweirad montiert sein. Bei dem Rohrabschnitt kann es sich um einen Rohrabschnitt des Rahmens, des Gepäckträgers oder des Sattelrohrs des Zweirads handeln. Eine Halterung gemäß dem Oberbegriff des Anspruchs 1 ist aus der US 4966382A bekannt.

Üblicherweise ist die Halterung an das jeweils zu befestigende Zweiradschloss angepasst. Dies bedeutet, dass ein Abstand zwischen den Halteabschnitten und eine Größe der Aufnahmeöffnung an das jeweils zu befestigende Zweirad-Schloss angepasst sind. Nachteiligerweise können aufgrund der Anpassung an ein bestimmtes Zweirad-Schloss andere Zweirad-Schlösser nicht oder nur ungenügend, d.h. insbesondere mit einem deutlichen Spiel, mittels der Halterung befestigt werden. Eine solche unangepasste Befestigung des Zweirad-Schlosses an der Halterung kann zu einem Hin- und Herschlagen des Schlosses in der Halterung oder einem Klappern einzelner Bestandteile des Schlosses (z.B. einzelner Gelenkstäbe) und damit zu unerwünschten Geräuschen oder Abnutzungen des Zweirad-Schlosses führen.

Es ist die Aufgabe der Erfindung, eine Halterung für ein Zweirad-Schloss anzugeben, mit welchem verschiedene Schlösser auf sichere Art und Weise befestigbar sind.

Diese Aufgabe wird durch eine Halterung mit den Merkmalen des Anspruchs 1 gelöst, und insbesondere dadurch, dass die Arretiereinrichtung einen Spannbügel umfasst, wobei zwischen dem Spannhebel und dem ersten Halteabschnitt des Halters eine erste Schwenkverbindung mit einer ersten Schwenkachse vorgesehen ist, wobei zwischen dem Spannbügel und dem Spannhebel eine zweite Schwenkverbindung mit einer zweiten Schwenkachse vorgesehen ist, und wobei zwischen dem Spannbügel und dem zweiten Halteabschnitt des Halters eine dritte Schwenkverbindung mit einer dritten Schwenkachse vorgesehen ist, wobei wenigstens eine der drei genannten Schwenkverbindungen lösbar ist, um die Arretiereinrichtung für ein Einsetzen oder Entnehmen eines Zweirad-Schlosses in die bzw. aus der Aufnahmeöffnung öffnen zu können, und wobei die betreffende Schwenkverbindung eine erste Verbindungseinrichtung und eine zweite Verbindungseinrichtung aufweist.

Bei der erfindungsgemäßen Halterung sind die Halteabschnitte zueinander flexibel, d.h. sie können reversibel aufeinander zu und voneinander weg bewegt werden, wodurch sich der Winkel zwischen den Halteabschnitten verändert. Der Winkel zwischen den Halteabschnitten kann bezüglich eines Querschnitts durch die Aufnahmeöffnung durch zwei Geraden definiert werden, die jeweils eine Verlaufsrichtung der Halteabschnitte angeben. Die beiden Halteabschnitte bilden somit zwei Schenkel, die den Querschnitt der Aufnahmeöffnung begrenzen. Der Winkel zwischen den beiden Halteabschnitten kann in der Ausgangsstellung des Halters, also bevor das Zweirad-Schloss in die Aufnahmeöffnung eingesetzt wird, insbesondere einen Wert von 90° oder einen Wert von <90° aufweisen.

Durch die Veränderung des Winkels kann ein Abstand zwischen dem ersten und dem zweiten Halteabschnitt (insbesondere in der Fixierstellung relativ zu der Entnahmestellung des Spannhebels) verringert werden, wodurch eine Klemmwirkung auftritt und/oder eine Klemmwirkung zumindest durch Versetzen des Spannhebels von der Fixierstellung in die Entnahmestellung herbeigeführt werden kann. Bei in den Halter eingelegtem Zweirad-Schloss ist das Zweirad-Schloss auf diese Weise mittels Klemmung an dem Halter fixierbar.

Hierbei kann insbesondere vorgesehen sein, dass das Zweirad-Schloss bereits in der Entnahmestellung des Spannhebels unter Ausbildung eines vorläufigen Klemmsitzes in der Aufnahmeöffnung aufgenommen werden kann, d.h. der Halter wirkt nach Art einer Klammer. In diesem Fall wird bei Einsetzen des Zweirad-Schlosses in die Aufnahmeöffnung der Winkel zwischen dem ersten Halteabschnitt und dem zweiten Halteabschnitt vergrößert, d.h. die beiden Halteabschnitte werden hierdurch auseinander gespreizt. Es kann auch vorgesehen sein, dass der Winkel zwischen dem ersten Halteabschnitt und dem zweiten Halteabschnitt durch das Bewegen des Spannhebels von der Fixierstellung in die Entnahmestellung verändert (insbesondere verringert) wird. Zumindest jedoch kann durch Bewegen des Spannhebels aus der Entnahmestellung in die Fixierstellung das Zweirad-Schloss nach seinem Einsetzen in die Aufnahmeöffnung mittels Klemmung (endgültig) fixiert werden.

Erfindungsgemäß ist also eine Arretiereinrichtung mit einem Spannhebel vorgesehen, wobei durch Bewegen des Spannhebels aus der Entnahmestellung in die Fixierstellung die beiden Halteabschnitte aufeinander zu bewegt werden können (d.h. der Winkel zwischen dem ersten Halteabschnitt und dem zweiten Halteabschnitt kann verringert werden) und/oder wobei eine zwischen den beiden Halteabschnitten vorgesehene Klemmwirkung herbeigeführt oder verstärkt werden kann (ohne dass hierbei der Winkel zwischen dem ersten Halteabschnitt und dem zweiten Halteabschnitt verringert werden muss, z.B. weil die beiden Halteabschnitte bereits an dem Zweirad-Schloss anliegen).

Beispielsweise können der erste und der zweite Halteabschnitt derart ausgebildet sein, dass der erste und der zweite Halteabschnitt in der Fixierstellung des Spannhebels im Wesentlichen parallel zueinander ausgerichtet sind. Dies führt dazu, dass eine auf das Zweirad-Schloss einwirkende Klemmkraft sich nahezu vollständig über die Fläche der Halteabschnitte verteilen kann.

Generell ist es bevorzugt, wenn das Zweirad-Schloss in der Aufnahmeöffnung des Halters formschlüssig aufnehmbar ist, d.h. wenn der Halter entlang des Umfangs des Zweirad-Schlosses oder entlang eines Teils des Umfangs des Zweirad-Schlosses komplementär zu dem Zweirad-Schloss geformt ist.

Bei der erfindungsgemäßen Halterung ist von Vorteil, dass ein zu befestigendes Zweirad-Schloss aufgrund der Klemmung zwischen den Halteabschnitten, auch bei unruhiger Fahrt des Zweirads, sicher gehalten wird. Zudem ist die Halterung für verschiedene Zweirad-Schlösser einsetzbar, da bei unterschiedlichen Zweirad-Schlössern eine Klemmung jeweils bei einem unterschiedlichen Winkel zwischen den Halteabschnitten eintreten kann, wobei die Halteabschnitte durch Einsetzen des Zweirad-Schlosses in die Aufnahmeöffnung und/oder durch Versetzen (z.B. Umklappen) des Spannhebels in unterschiedliche Winkel zueinander verbracht werden können. Ein eventuelles Spiel, das aus unterschiedlichen Größen bzw. Durchmessern verschiedener Zweirad-Schlösser resultiert, wird durch die Klemmung bzw. den variablen Winkel zwischen den beiden Halteabschnitten aufgebraucht. Durch die Klemmung kann auch ein Kraftschluss bewirkt werden, der eine Relativbewegung und somit ein unerwünschtes Klappern einzelner Bestandteile des Schlosses (z.B. einzelner Gelenkstäbe) während der Fahrt verhindert.

Bei der erfindungsgemäßen Halterung kann über die erste und zweite Verbindungseinrichtung die betreffende Schwenkverbindung wahlweise geschlossen werden, beispielsweise um den an dem Spannhebel permanent angelenkten Spannbügel an dem zweiten Halteabschnitt des Halters zu befestigen. Durch Verschwenken des Spannhebels (um die erste Schwenkachse) können über den Spannbügel der erste Halteabschnitt und der zweite Halteabschnitt des Halters aufeinander zu bewegt werden, um den Winkel zwischen dem ersten und zweiten Halteabschnitt zu verringern und hierdurch das erläuterte Fixieren durch Klemmung zu bewirken, also das Verspannen des Zweirad-Schlosses innerhalb der Aufnahmeöffnung.

Insbesondere können die erste, die zweite und die dritte Schwenkachse parallel zueinander verlaufen. Beispielsweise können die erste Schwenkachse und die zweite Schwenkachse in einander gegenüberliegenden parallelen Flächen des Spannhebels gelagert sein. Bevorzugt können für den Spannhebel auch Standardkomponenten verwendet werden, wodurch die Herstellung der Halterung besonders wirtschaftlich und kostengünstig erfolgen kann.

Hierbei kann die Arretiereinrichtung von zumindest einem der beiden Halteabschnitte lösbar sein, wodurch die Arretiereinrichtung in der Entnahmestellung ein Entnehmen oder Einführen des Zweirad-Schlosses aus der Halterung bzw. in die Halterung nicht behindert. Die Verwendung der Halterung kann auf diese Weise vereinfacht werden. Zu diesem Zweck können insbesondere die erste und die zweite Verbindungseinrichtung temporär voneinander getrennt werden. Es ist auch möglich, die genannte lösbare Schwenkverbindung an der Stelle der zweiten Schwenkachse vorzusehen, also zwischen dem Spannhebel und dem Spannbügel.

Die erste und die zweite Verbindungseinrichtung für die genannte lösbare Schwenkverbindung können insbesondere einen Vorsprung (z.B. Haken, Achselement, Bügelabschnitt oder dergleichen) einerseits und ein zugeordnetes Gegenelement (z.B. mit einer Vertiefung, Öffnung oder dergleichen) andererseits aufweisen. Vorzugsweise kann somit eine formschlüssige, jedoch drehbewegliche Verbindung zwischen den beiden Teilen der Arretiereinrichtung (z.B. zwischen dem Spannbügel und dem zweiten Halteabschnitt des Halters) entstehen.

Beispielsweise kann der Spannbügel bei einer bevorzugten Ausführungsform aus einem runden Stahldraht gebogen bzw. geformt sein, wobei der Spannbügelabschnittsweise in eine Mulde eines Aufnahmevorsprungs des zweiten Halteabschnitts eingreifen kann, um eine Verbindung mit dem zweiten Halteabschnitt herzustellen. Insbesondere kann der Spannbügel einen gerade geformten Querabschnitt aufweisen, der in eine Mulde des Aufnahmevorsprungs eingreift. Die zweite Verbindungseinrichtung kann demnach den Aufnahmevorsprung mit der Mulde umfassen. Aufgrund der Klemmwirkung kann in der Fixierstellung des Spannhebels eine Kraft auf den Spannbügel wirken, die den Spannbügel in der Mulde des Aufnahmevorsprungs fixiert und somit auch ein Lösen bei starken Vibrationen nahezu unmöglich macht. Der Spannbügel kann dabei bereichsweise mit einem elastischen Material wie beispielsweise Gummi, Silikon oder ähnlichem überzogen sein, um beim Eingreifen in die Mulde des Aufnahmevorsprungs keine unerwünschten Geräusche oder Beschädigungen zu verursachen.

Vorzugsweise weist der Spannbügel einen Querabschnitt auf, der die genannte dritte Schwenkachse definiert, sowie einen senkrecht zu dem Querabschnitt ausgerichteten Längsabschnitt, der den Querabschnitt mit dem Spannhebel verbindet (insbesondere mit einem Achselement des Spannhebels, das parallel zu dem Querabschnitt ausgerichtet ist und die genannte zweite Schwenkachse definiert, wie nachstehend noch erläutert wird).

Vorteilhafte Ausführungsformen der Erfindung sind der Beschreibung, den abhängigen Ansprüchen sowie den Zeichnungen zu entnehmen.

Gemäß einer vorteilhaften Ausführungsform weist der Spannbügel zwischen der zweiten Schwenkachse und der dritten Schwenkachse eine wirksame Länge auf, die verstellbar ist. Mittels der wirksamen Länge des Spannbügels kann eingestellt werden, wie groß in der Fixierstellung der Abstand zwischen dem ersten Halteabschnitt und dem zweiten Halteabschnitt ist. Damit kann auch der Winkel zwischen den Halteabschnitten in der Fixierstellung über die wirksame Länge des Spannbügels eingestellt werden. Die Verstellbarkeit des Spannbügels kann es also ermöglichen, die Halterung an verschiedene Zweirad-Schlösser anzupassen, so dass die verschiedenen Zweirad-Schlösser sicher und fest an der Halterung befestigbar sind.

Bevorzugt ist die wirksame Länge des Spannbügels stufenlos und/oder mittels eines Schraubgewindes verstellbar. Beispielsweise kann die genannte zweite Schwenkachse durch ein an dem Spannhebel drehbar gelagertes, vorzugsweise zylindrisches Achselement gebildet sein, wobei der Spannbügel an oder in dem Achselement versetzbar ist. Hierbei kann der Spannbügel mittels eines Schraubgewindes mit dem Achselement des Spannhebels verbindbar sein, wobei durch Drehung des Spannbügels (um die Achse des Schraubgewindes) die wirksame Länge desselben veränderbar ist. Vorzugsweise ist hierfür ein das Achselement des Spannhebels durchquerendes Innengewinde vorgesehen, in das ein Außengewinde des Spannbügels eingreift. Die wirksame Länge des Spannbügels kann dann insbesondere in Schritten von halben Drehungen des Spannbügels variiert werden.

Beispielsweise kann der Spannbügel ein M5-Gewinde aufweisen, um den Spannbügel mit dem Spannhebel zu verbinden.

Alternativ umfasst der Spannbügel kein Gewinde und ist in dem Achselement stufenlos verschiebbar. Der Spannbügel kann dann z.B. durch ein Feststellmittel (wie nachfolgend beschrieben) in dem Achselement festgelegt werden.

Aufgrund der Veränderbarkeit der wirksamen Länge kann die Halterung auf einfache Weise auch daran angepasst werden, wenn zusätzlich zu dem Zweirad-Schloss weitere Gegenstände wie beispielsweise Schraubenschlüssel oder anderes Werkzeug zusätzlich zu dem Schloss mit der Halterung befestigt werden sollen. In diesem Fall wird in der Fixierstellung ein größerer Abstand zwischen den Halteabschnitten benötigt, welcher sich durch Verlängerung der wirksamen Länge des Spannbügels bereitstellen lässt.

Gemäß einer bevorzugten Ausführungsform ist ein Verstellen der wirksamen Länge des Spannbügels mittels eines Feststellmittels wahlweise unterbindbar. Dies bedeutet, dass in einer Befestigungsstellung des Feststellmittels die eingestellte wirksame Länge des Spannbügels nicht verändert werden kann. Der Spannbügel ist dann in dem Achselement festgelegt. In einer geöffneten Stellung des Feststellmittels kann hingegen eine Einstellung der wirksamen Länge des Spannbügels vorgenommen werden. Das Vorsehen eines Feststellmittels birgt den Vorteil, dass eine unbeabsichtigte Verstellung des Spannbügels beispielsweise in der Freigabe-/Entnahmestellung des Spannhebels verhindert werden kann. Erst durch Überführen des Feststellmittels in die geöffnete Stellung kann die wirksame Länge des Spannbügels verändert und damit eingestellt werden.

Gemäß einer weiteren vorteilhaften Ausführungsform ist das Feststellmittel drehbar um die zweite Schwenkachse angeordnet und/oder ist das Feststellmittel Bestandteil eines Lagersitzes der zweiten Schwenkachse. Das Feststellmittel kann also z.B. in dem Achselement vorgesehen sein und insbesondere so in dem Achselement angeordnet sein, dass es als Lagersitz für das Achselement dient. Dazu kann sich das Feststellmittel abschnittsweise innerhalb des Achselements erstrecken und einen immer außerhalb des Achselements liegenden Lagerabschnitt aufweisen, der als Lagerzapfen für die genannte zweite Schwenkverbindung dient.

Besonders bevorzugt umfasst das Feststellmittel einen Gewindestift, der sich axial entlang der zweiten Schwenkachse erstreckt, wobei ein erstes axiales Ende des Gewindestifts wahlweise eine Kraft auf den Spannbügel ausübt, um diesen an dem Achselement zu fixieren (insbesondere bezüglich einer Drehbewegung). Vorzugsweise ist der Gewindestift an dem Achselement verschraubbar. Bei dem Gewindestift kann es sich z.B. um eine Madenschraube handeln, die mit einem weiteren Innengewinde des Achselements verschraubt ist. Sowohl das weitere Innengewinde des Achselements als auch der Gewindestift können sich koaxial zueinander entlang der zweiten Schwenkachse erstrecken.

Zur Drehung des Gewindestifts kann an einem zweiten axialen Ende des Gewindestifts in dem Lagerabschnitt eine Eingriffsmulde vorgesehen sein, die ein Eingreifen mit einem Werkzeug (z.B. Innensechskantschlüssel) ermöglicht. Mittels des Werkzeugs kann das Feststellmittel in seiner Relativposition bezüglich des Spannbügels eingestellt werden und insbesondere durch Schraubbewegungen von der geöffneten Stellung in die Befestigungsstellung überführt werden. Beispielsweise kann das Feststellmittel den Spannbügel in der Befestigungsstellung durch Klemmung in dem Achselement fixieren, wodurch eine Verstellung des Spannbügels unterbunden wird.

Das erste axiale Ende des Gewindestifts kann insbesondere gegen den Längsabschnitt des Spannbügels drücken, sofern der Gewindestift genügend weit in das Achselement eingeschraubt wird. Eine Position, in welcher der Gewindestift auf den Spannbügel drückt, entspricht der oben genannten Befestigungsstellung. Die Länge des Gewindestifts kann so gewählt sein, dass der Lagerabschnitt des Gewindestifts in der Befestigungsstellung einseitig axial aus dem Achselement hervorsteht, wobei der Lagerabschnitt zur drehbaren Lagerung des Achselements dienen kann.

Das Achselement kann zusätzlich einen Lagerzapfen aufweisen, der gemeinsam mit dem hervorstehenden Abschnitt des Gewindestifts eine Rotationsachse des Achselements definiert, die auch als zweite Schwenkachse bezeichnet werden kann.

Eine Richtung, in welche sich das Feststellmittel in das Achselement hinein erstreckt, kann senkrecht zu der Richtung steht, die durch den Längsabschnitt des Spannbügels bzw. durch die Richtung des das Achselement durchquerenden Innengewindes definiert ist.

Die Anpassung der Halterung an ein bestimmtes Zweirad-Schloss ist im Folgenden beispielhaft beschrieben. Zunächst kann sich das Feststellmittel in der geöffneten Stellung befinden, d.h. der Gewindestift ist nur soweit in das Achselement eingeschraubt, dass der Gewindestift nicht an dem Spannbügel anliegt. Dadurch wird die Anpassung der wirksamen Länge des Spannbügels an das Zweirad-Schloss ermöglicht. Ist eine passende wirksame Länge eingestellt (z.B. durch Drehen oder Verschieben des Spannbügels), so kann der Gewindestift mittels eines Innensechskantschlüssels oder dergleichen soweit in das Achselement eingeschraubt werden, dass der Gewindestift den Spannbügel mittels Klemmung in der eingestellten Position bezüglich des Achselements hält. In der so erreichten Befestigungsstellung des Gewindestifts wird eine weitere Änderung der wirksamen Länge unterbunden.

Gemäß einer weiteren vorteilhaften Ausführungsform wird der Spannbügel mittels eines Spannelements zumindest in der Entnahmestellung von dem ersten oder zweiten Halteabschnitt weggedrängt. Beispielsweise kann der Spannbügel durch eine Feder (z.B. Torsionsfeder) automatisch um die zweite Schwenkachse gedreht werden, sobald der Spannhebel von der Fixierstellung in die Entnahmestellung überführt wird. In der Folge kann der Spannbügel beispielsweise aus der genannten Mulde des Aufnahmevorsprungs "hochschnallen", um beim Entnehmen und Wiedereinsetzen des Zweirad-Schlosses in die Halterung nicht im Wege zu sein.

Besonders bevorzugt liegt in einer Totpunktstellung der Arretiereinrichtung die genannte zweite Schwenkachse (Schwenkachse zwischen Spannbügel und Spannhebel) auf einer Geraden, die durch die dritte Schwenkachse (Schwenkachse zwischen Spannbügel und zweitem Halteabschnitt des Halters) und die erste Schwenkachse (Schwenkachse zwischen Spannhebel und erstem Halteabschnitt des Halters) verläuft. Die Totpunktstellung der Arretiereinrichtung ist dabei dadurch gekennzeichnet, dass für das Versetzen der Arretiereinrichtung von der Entnahmestellung in die Fixierstellung und/oder von der Fixierstellung in die Entnahmestellung temporär eine Kraft aufgebracht werden muss, wobei nach Überwinden der Totpunktstellung eine Zielstellung (d.h. die Fixierstellung bzw. die Entnahmestellung) im Wesentlichen automatisch eingenommen wird. Die Totpunktstellung stellt somit eine zwischen der Entnahmestellung und der Fixierstellung gelegene instabile Zwischenstellung dar.

In der Totpunktstellung können die erste, die zweite und die dritte Schwenkachse in Flucht zueinander liegen, wobei auf die zweite Schwenkachse eine maximale Rückstellkraft wirkt, welche insbesondere aus der erläuterten Klemmung eines Zweirad-Schlosses in der Aufnahmeöffnung des Halters resultiert. Beidseitig der Totpunktstellung kann der Spannhebel durch die ausgeübte Kraft angetrieben werden und zwar entweder in Richtung der Entnahmestellung oder in Richtung der Fixierstellung. Das Vorsehen einer Totpunktstellung ist insbesondere deshalb von Vorteil, da eine Kraft aufgewendet werden muss, um die Totpunktstellung zu erreichen. Aus diesem Grund kann ein unbeabsichtigtes Betätigen bzw. Lösen des Spannhebels während der Fahrt mit hoher Sicherheit vermieden werden. Auf diese Weise kann zudem eine starke Unempfindlichkeit gegenüber Vibrationen bei der Fahrt erreicht werden.

Gemäß einer weiteren vorteilhaften Ausführungsform (mit oder ohne den vorgenannten Spannbügel) weist die Halterung wenigstens eine Elastizität auf, die, wenn ein Zweirad-Schloss in die Aufnahmeöffnung eingesetzt ist und der Spannhebel in die Fixierstellung bewegt ist, gespannt (z.B. komprimiert oder gedehnt) ist und hierdurch zum einen eine Haltekraft auf das Zweirad-Schloss ausübt und zum anderen den Spannhebel in der Fixierstellung stabilisiert, wobei die Elastizität dazu angepasst ist, durch Bewegen der Arretiereinrichtung bzw. des Spannhebels in Richtung einer bzw. der vorgenannten Totpunktstellung zunehmend gespannt zu werden und nach Durchlaufen der Totpunktstellung zunehmend zu entspannen. Anders ausgedrückt dient die Elastizität dazu, zum einen eine Rückstellkraft aufzubauen, welche die erwünschte Klemmung zum Fixieren des Zweirad-Schlosses in der Aufnahmeöffnung unterstützt oder bewirkt, und zum anderen nach Durchlaufen der Totpunktstellung den Spannhebel in Richtung der Fixierstellung oder der Entnahmestellung anzutreiben und in der jeweiligen Stellung stabil zu halten.

Bevorzugt ist die Elastizität durch eine Eigenelastizität zumindest eines Teils des ersten Halteabschnitts und/oder des zweiten Halteabschnitts des Halters gebildet. Die Eigenelastizität kann ein Auseinanderspreizen des ersten und zweiten Halteabschnitts bei der Entspannung der Elastizität bewirken, wodurch insbesondere in der Entnahmestellung eine Entnahme des Zweirad-Schlosses aus dem auseinandergespreizten Halter erleichtert wird. Zudem ist von Vorteil, dass bei der Ausnutzung der Eigenelastizität kein separates elastisches Element erforderlich ist, um die genannte Totpunktstellung für die Arretiereinrichtung zu definieren. Allerdings ist es auch möglich, dass die für das Definieren einer Totpunktstellung erforderliche Elastizität durch ein separates elastisches Element bewirkt wird, oder dass die vorstehend erläuterte Eigenelastizität des Halters durch ein separates elastisches Element unterstützt wird, wobei es sich bei dem separaten elastischen Element insbesondere um eine elastische Auflage an dem ersten Halteabschnitt und/oder dem zweiten Halteabschnitt des Halters, z.B. ein Kunststoffteil und/oder das nachstehend noch genannte Schutzelement handeln kann.

Insbesondere kann der vorgenannte Spannbügel somit starr (d.h. nicht längenelastisch) ausgebildet und dementsprechend einfach und kostengünstig herstellbar sein. Insbesondere kann der erste Halteabschnitt und/oder der zweite Halteabschnitt des Halters einen rückfedernden Lagerungsabschnitt aufweisen, an dem die Arretiereinrichtung bzw. ein Teil hiervon gelagert ist und der beim Durchlaufen der Totpunktstellung der Arretiereinrichtung entgegen seiner Vorspannung temporär auslenkbar ist (d.h. zunächst temporär gespannt wird und sodann entspannt). Ein derartiger rückfedernder Lagerungsabschnitt kann beispielsweise bezüglich eines Anliegeabschnitts des betreffenden Halteabschnitts, der zum Anliegen an dem eingeklemmten Zweirad-Schloss vorgesehen ist, abgewinkelt sein und/oder über das eingeklemmte Zweirad-Schloss überstehen. Somit kann der Lagerungsabschnitt insbesondere bezüglich eines Anliegeabschnitts des betreffenden Halteabschnitts, der zum Anliegen an dem eingeklemmten Zweirad-Schloss vorgesehen ist, rückfedernd ausgebildet sein. Vorzugsweise ist der Spannhebel an einem rückfedernden Lagerungsabschnitt des ersten Halteabschnitts schwenkbar gelagert, und/oder der vorgenannte Spannbügel ist an einem rückfedernden Lagerungsabschnitt des zweiten Halteabschnitts schwenkbar gelagert.

Alternativ kann als separates elastisches Element beispielsweise eine Zugfeder oder eine Druckfeder vorgesehen sein, welche die Arretiereinrichtung umfasst. Sofern - wie vorstehend erläutert - dem Spannhebel ein Spannbügel zugeordnet ist, kann eine solche Feder in den Spannbügel integriert sein, wodurch sich die wirksame Länge des Spannbügels beim Überführen des Spannhebels von der Entnahmestellung in die Fixierstellung verändern kann. Insbesondere kann die wirksame Länge des Spannbügels in der Totpunktstellung maximal sein.

Gemäß einer weiteren vorteilhaften Ausführungsform ist das Zweirad-Schloss allein mittels Klemmung zwischen dem ersten Halteabschnitt und dem zweiten Halteabschnitt an dem Halter befestigbar. Dies bedeutet, dass nur die Klemmung notwendig ist, um das Schloss zu halten. Dadurch kann die Halterung platzsparend ausgeführt werden. Insbesondere muss die Halterung keine Tasche (z.B. mit einem Taschenboden) bilden, die das Zweirad-Schloss durch Abstützen hält. Vielmehr können bereits die - im Vergleich zu einer Tasche deutlich kleiner ausgebildeten - Halteabschnitte für die Befestigung des Zweirad-Schlosses ausreichen.

Insbesondere kann der Abstand des ersten Halteabschnitts und des zweiten Halteabschnitts so gewählt sein, dass bereits beim Einlegen des Zweirad-Schlosses in die Aufnahmeöffnung des Halters (und noch in der Entnahmestellung des Spannhebels) von den Halteabschnitten auf das Zweirad-Schloss eine Kraft ausgeübt wird, die das Zweirad-Schloss gegen ein Herausfallen aus der Halterung sichert. Dies bedeutet, dass beim Einlegen des Zweirad-Schlosses die Halteabschnitte voneinander wegbewegt werden können, wodurch eine provisorische Klemmung des Zweirad-Schlosses eintritt. Diese provisorische Klemmung kann ausreichen, das Zweirad-Schloss in der Halterung solange festzuhalten, bis der Spannhebel in die Fixierstellung verbracht worden ist.

Bevorzugt sind der erste Halteabschnitt und der zweite Halteabschnitt des Halters mittels eines Verbindungsabschnitts verbunden, wobei der erste Halteabschnitt, der Verbindungsabschnitt und der zweite Halteabschnitt gemeinsam eine C- oder U-förmige Gestalt bilden. Räumlich gesehen kann die Halterung also zumindest drei offene Seiten umfassen, wodurch sich viele mögliche Richtungen ergeben, um das Zweirad-Schloss in die Halterung einzulegen. Insbesondere kann das Zweirad-Schloss in der Entnahmestellung des Spannhebels somit "seitlich" in die Halterung eingelegt werden, d.h. durch die (im Querschnitt der C- oder U-Form) offene Seite der C- oder U-förmigen Gestalt des Halters. Die Verwendung der Halterung kann auf diese Weise vereinfacht werden und flexibel gestaltet sein.

Die Möglichkeit des seitlichen Einlegens des Zweirad-Schlosses gestattet es auch, die Halterung in Eckbereichen eines Zweirad-Rahmens anzuordnen, in welchen wenig Platz zur Verfügung steht (insbesondere zu wenig Platz für ein axiales Einsetzen entlang der Längsachse des Zweirad-Schlosses). Eine derartige Anordnung ist auch insbesondere deshalb möglich, da die Halterung selbst - wie bereits erwähnt - besonders platzsparend ausgebildet werden kann.

Insbesondere können die Halteabschnitte die Schenkel der C- oder U-förmigen Gestalt bilden, wobei in der Entnahmestellung ein Abstand zwischen den Halteabschnitten mit steigendem Abstand zu dem Verbindungsabschnitt zunimmt. Die Halteabschnitte verlaufen also gespreizt. Die Spreizung kann entgegen einer Eigenelastizität der Halterung in der Fixierstellung des Spannhebels reduziert werden. In der Fixierstellung können die Halteabschnitte zumindest im Wesentlichen parallel zueinander angeordnet sein oder sich mit steigendem Abstand zu dem Verbindungsabschnitt gegenseitig annähern.

Der erste Halteabschnitt und der zweite Halteabschnitt des Halters müssen nicht unbedingt vollständig eben ausgebildet sein. Stattdessen ist es auch möglich, dass wenigstens eine der einander zugewandten Flachseiten des ersten und zweiten Halteabschnitts zumindest abschnittsweise abgewinkelt oder konvex gewölbt ist, wobei aufgrund der Abwinkelung bzw. konvexen Wölbung die genannte Eigenelastizität des Halters zumindest teilweise bewirkt wird, wenn das Zweirad-Schloss in die Aufnahmeöffnung der Halterung eingesetzt und der Spannhebel in die Fixierstellung gebracht ist.

Gemäß einer weiteren vorteilhaften Ausführungsform ist auf dem ersten Halteabschnitt und/oder dem zweiten Halteabschnitt und/oder dem Verbindungsabschnitt des Halters und/oder auf dem Stützbereich der Halterung jeweils zumindest bereichsweise ein Schutzelement zum Anliegen an das Zweirad-Schloss angeordnet. Das Schutzelement kann beispielsweise ein Kunststoff-Formteil (z.B. aus einem thermoplastischen Elastomer, TPE) sein, dessen Form der Kontur der Halteabschnitte und des Verbindungsabschnitts angepasst ist. Insbesondere kann das Schutzelement ebenfalls eine C- oder U-Form aufweisen. Das Schutzelement dient dazu, das Zweirad-Schloss und die Halterung selbst vor Beschädigungen, insbesondere vor Kratzern, zu schützen. Zudem können Geräusche beim Einlegen des Zweirad-Schlosses in die Halterung reduziert werden, da das Schutzelement als Dämpfung wirken kann. Zum Schutz vor Beschädigungen liegt das Schutzelement bei eingelegtem Zweirad-Schloss zwischen dem Zweirad-Schloss und den Halteabschnitten bzw. dem Verbindungsabschnitt.

Alternativ oder zusätzlich kann ein weiteres Schutzelement in dem Stützbereich angeordnet sein, welches den Rahmen des Zweirads vor Beschädigungen schützt.

Insbesondere kann das jeweilige Schutzelement die Kanten des Halters zumindest bereichsweise umschließen, um z.B. von den Kanten verursachte Kratzer an dem Zweirad-Schloss oder dem Rahmen zu vermeiden.

Bevorzugt kann das Schutzelement - wie bereits erwähnt - auch dazu dienen, die Eigenelastizität der Halterung bereitzustellen und/oder zu erhöhen.

Weiter bevorzugt weist der Stützbereich zumindest zwei (vorzugsweise vier) Vorsprünge auf, die eine Führung für den Rohrabschnitt bilden. Die Vorsprünge können Längskanten oder Eckpunkte eines Rechtecks definieren, wobei die Halterung insbesondere derart an dem Rohrabschnitt befestigt werden kann, dass sich der Rohrabschnitt entlang einer Längsrichtung des Rechtecks erstreckt. Bevorzugt sind die Vorsprünge jeweils prismenförmig ausgebildet und können so eine Führung für den Rohrabschnitt bilden.

Weiter bevorzugt ist der Stützbereich der Halterung im Bereich der vorgenannten Führung mittels eines Klettbandes und/oder mittels einer Verschraubung mit einer, insbesondere einzelnen, Schraube und/oder mittels einer, insbesondere einzelnen, Schelle an dem Rohrabschnitt befestigbar. Die Befestigung an dem Rohrabschnitt kann also mittels Spannklettband, Unischellen, metrischer Verschraubung, Schlauchschellen und dergleichen erfolgen. Insbesondere kann zwischen dem Stützbereich und dem Rohrabschnitt auch ein Kratzschutz, z.B. eine Gummimatte oder ein Gummischlauch vorgesehen sein, um eine Beschädigung des Rohrabschnitts zu vermeiden. Anstelle einer einzelnen Schraube oder einer einzelnen Schelle können auch mehrere Schrauben, Klettbänder und/oder Schellen zur Befestigung dienen.

Gemäß einer weiteren vorteilhaften Ausführungsform ist die Halterung als Stanz-Biege-Teil und insbesondere aus einem Blech gefertigt. Bei der Verwendung von Blech oder anderen federnden Materialien kann sich eine hohe Eigenelastizität der Halterung ergeben. Auf diese Weise kann die Halterung in einem weiten Bereich reversibel verformt werden, wenn sich der Spannhebel von der Entnahmestellung in die Fixierstellung bewegt. In der Folge können Zweirad-Schlösser mit stark unterschiedlichen Größen mit der Halterung befestigt werden.

Alternativ kann beispielsweise auch ein Edelstahl für die Halterung verwendet werden, der mit einer Edelstahl-Glanz-Optik versehen ist. Bei Verwendung eines dünnen Edelstahl-Materials kann ebenfalls eine hohe Eigenelastizität erreicht werden.

Bevorzugt ist in dem genannten Verbindungsabschnitt, welcher den ersten Halteabschnitt und den zweiten Halteabschnitt des Halters verbindet, eine Aussparung vorgesehen, in die der zweite Halteabschnitt hineinragt (vorzugsweise beweglich hineinragt). Ein solches Hineinragen des zweiten Halteabschnitts in den Verbindungsabschnitt kann auf einfache Weise in einem Stanz-Biege-Prozess realisiert werden, indem zunächst die Aussparung in den Verbindungsabschnitt gestanzt und anschließend der Verbindungsabschnitt so umgebogen wird, dass der zweite Halteabschnitt in die Aussparung hineinragt. Auf diese Weise wird die Stabilität der Halterung erhöht, da ein "Auseinanderfalten" der Halterung nicht mehr auf einfache Art möglich ist, da der in die Aussparung hineinragende Teil des ersten Halteabschnitts dies behindert.

Weiterer Gegenstand der Erfindung ist ein Zweirad-Schloss mit einer Halterung der erläuterten Art. Für das erfindungsgemäße Zweirad-Schloss gelten die zu der erfindungsgemäßen Halterung getroffenen Aussagen entsprechend, insbesondere bezüglich bevorzugter Ausführungsformen und Vorteilen.

Nachfolgend wird die Erfindung rein beispielhaft unter Bezugnahme auf die Zeichnungen beschrieben. Es zeigen:
- Fig. 1: eine erste Ausführungsform einer erfindungsgemäße Halterung mit darin befestigtem Zweirad-Schloss in einer perspektivischen Ansicht von oben;
- Fig. 2: die Halterung und das Zweirad-Schloss von Fig. 1 in einer perspektivischen Ansicht von unten;
- Fig. 3: die Halterung von Fig. 1 in einer perspektivischen Ansicht von oben;
- Fig. 4: die Halterung von Fig. 1 in einer perspektivischen Ansicht von unten;
- Fig. 5: eine zweite Ausführungsform einer erfindungsgemäßen Halterung mit darin befestigtem Zweirad-Schloss in einer perspektivischen Ansicht von oben;
- Fig. 6: die Halterung von Fig. 5 in einer perspektivischen Ansicht von oben;
- Fig. 7: die Halterung von Fig. 5 in einer perspektivischen Ansicht von unten;
- Fig. 8: einen Spannhebel und einen Spannbügel in einer Explosionsansicht;
- Fig. 9: eine dritte Ausführungsform einer erfindungsgemäßen Halterung in einer perspektivischen Ansicht; und
- Fig. 10: die Halterung von Fig. 9 in einer weiteren perspektivischen Ansicht.

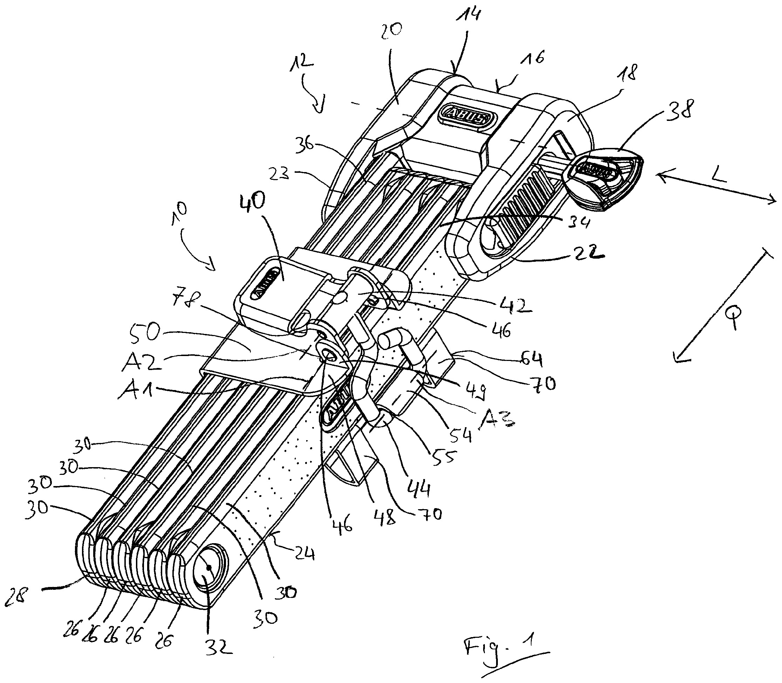

Fig. 1 zeigt eine erste Ausführungsform einer Halterung 10, in welcher ein Gelenkschloss 12 befestigt ist (auch als Faltschloss bezeichnet). Das Gelenkschloss 12 umfasst einen Schlosskörper 14, welcher einen Gehäuseabschnitt 16 aufweist. Der Gehäuseabschnitt 16 besitzt eine längliche (beispielsweise quaderförmige oder zylindrische) Grundform mit einem ersten Endbereich 18 und einem zweiten Endbereich 20, die einander bezüglich einer hierdurch definierten Gehäuseachse L gegenüberliegen. Der Gehäuseabschnitt 16 geht in dem ersten Endbereich 18 bündig in einen flachen, zungenförmigen Befestigungsabschnitt 22 und in dem zweiten Endbereich 20 bündig in einen flachen, zungenförmigen Führungsabschnitt 23 über.

Das Gelenkschloss 12 umfasst ferner einen Schlossbügel in Form eines Gelenkstabbügels 24, der zu einer kompakten Einheit zusammengefaltet und in diesem Zustand vorzugsweise auch an dem Schlosskörper 14 verriegelt werden kann. Nach der Entnahme des Gelenkschlosses 12 aus der Halterung 10 kann im entriegelten Zustand des Gelenkschlosses 12 der Gelenkstabbügel 24 auseinandergefaltet werden, um auf an sich bekannte Weise eine Schlaufe zu bilden und hierdurch ein Zweirad abzusperren oder an einem anderen Gegenstand (z.B. Fahrradständer) zu sichern.

Im Einzelnen besitzt der Gelenkstabbügel 24 mehrere Gelenkstäbe 26, von denen einer als Schließstab 28 ausgebildet ist. Die Gelenkstäbe 26 und der Schließstab 28 sind jeweils flach ausgebildet und bestehen vorzugsweise aus Stahl, welcher von einem Kunststoffmantel 30 umgeben ist, um Beschädigungen an dem abzusperrenden Zweirad zu vermeiden. Die Gelenkstäbe 26 und der Schließstab 28 sind durch einen jeweiligen Niet 32 dergestalt der Reihe nach aneinander angelenkt, dass die Gelenkachsen parallel oder koaxial zueinander verlaufen und der Gelenkstabbügel 24 nach Art eines Zollstocks zusammengefaltet werden kann. In dem zusammengefalteten Zustand des Gelenkstabbügels 24 verlaufen die Längsachsen der Gelenkstäbe 26 und des Schließstabs 28 in einer Ebene parallel zueinander. Ein erstes Ende 34 des Gelenkstabbügels 24 ist an dem Befestigungsabschnitt 22 des Schlosskörpers 14 angelenkt, d.h. schwenkbar befestigt. Ein zweites Ende 36 des Gelenkstabbügels 24 wird durch das freie Ende des Schließstabs 28 gebildet, das als Verriegelungsabschnitt dient.

In dem Schlosskörper 14 ist ein (nicht gezeigter) Schließzylinder vorgesehen, welcher als Verriegelungsmechanismus dient und durch Drehung eines Schlüssels 38 einen (ebenfalls nicht gezeigten) Riegel wahlweise in eine Freigabestellung oder eine Schließstellung bewegt. In der Schließstellung kann der Schließstab 28 in dem Schlosskörper 14 arretiert werden.

Eine Drehachse und die Einführrichtung des Schlüssels 38 in den Schlosskörper 14 definieren eine Erstreckungsrichtung des Gehäuseabschnitts 16, die der bereits genannten Gehäuseachse L entspricht. Eine Querrichtung Q, in welcher der Befestigungsabschnitt 22 und der Führungsabschnitt 23 von dem Gehäuseabschnitt 16 abstehen, wird von der axialen Verlaufsrichtung der Gelenkstäbe 26 (weg von dem Gehäuseabschnitt 16) definiert. Die Querrichtung Q verläuft also in einem Winkel von 90° zu der Gehäuseachse L.

Das Gelenkschloss 12 ist in der Halterung 10 befestigt, welche aus einem federnden Blech geformt ist. Die Halterung 10 weist einen Spannhebel 40 auf, der um eine erste Schwenkachse A1 schwenkbar ist. Der Spannhebel 40 umfasst einen drehbar gelagerten zylindrischen Achsabschnitt 42, in welchem wiederum ein Spannbügel 44 mittels eines (nicht gezeigten) Gewindes befestigt ist. Eine wirksame Länge des Spannbügels 44 kann durch Drehung in dem Gewinde verändert werden. Über den drehbar gelagerten Achsabschnitt 42 ist der Spannbügel 44 an dem Spannhebel 40 um eine zweite Schwenkachse A2 schwenkbar gelagert, welche parallel zu der ersten Schwenkachse A1 ausgerichtet ist.

Der Spannhebel 40 ist über zwei Niete 46 mit einem abgewinkelten Lagerungsabschnitt 48 eines ersten Halteabschnitts 50 schwenkbar verbunden, der über das Gelenkschloss 12 bzw. den Gelenkstabbügel 24 übersteht. Die Niete 46 sind jeweils in einer senkrechten Umbiegung 49 des Lagerungsabschnitts 48 und in dem Spannhebel 40 drehbar verankert. Der erste Halteabschnitt 50 definiert im Wesentlichen eine rechteckige ebene Fläche, welche in der Fixierstellung an einer Oberseite des Gelenkstabbügels 24 des Gelenkschlosses 12 flächig anliegt. Die senkrechten Umbiegungen 49 stehen aus der von dem abgewinkelten Lagerungsabschnitt 48 definierten ebenen Fläche senkrecht hervor und erstrecken sich von dem Gelenkschloss 12 weg.

In der dargestellten Fixierstellung des Spannhebels 40 liegt der Spannhebel 40 auf einer Oberseite des ersten Halteabschnitts 50 auf. Eine Schwenkbewegung des Spannhebels 40 wird somit von dem ersten Halteabschnitt 50 einseitig begrenzt.

Die Drehachsen der drehbaren Nieten 46 definieren die erste Schwenkachse A1, um die der Spannhebel 40 schwenkbar ist. Der zylindrische Achsabschnitt 42 definiert die zweite Schwenkachse Achse A2, um die wiederum der Spannbügel 44 schwenkbar ist. Beim Schwenken des Spannhebels 40 um die erste Schwenkachse A1 verändert sich dabei die Position der zweiten Schwenkachse A2.

In den Figuren ist die Halterung 10 jeweils in der Fixierstellung des Spannhebels 40 gezeigt, in welcher der erste Halteabschnitt 50 flächig auf dem zusammengefalteten Gelenkstabbügel 24 aufliegt, sofern das Gelenkschloss 12 in die Halterung 10 eingelegt ist.

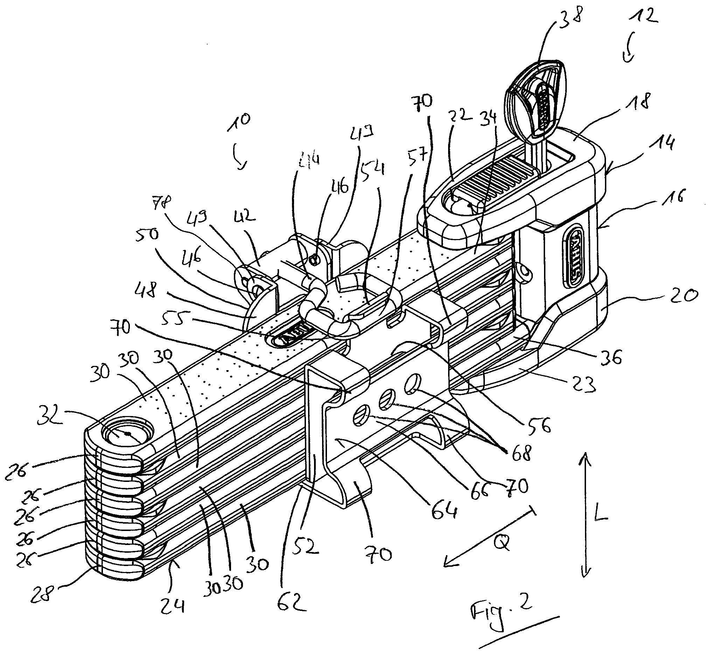

Zudem ist in der Fixierstellung der Gelenkstabbügel 24 zwischen dem ersten Halteabschnitt 50 und einem in Fig. 2 gezeigten zweiten Halteabschnitt 52 eingeklemmt und auf diese Art befestigt. Der zweite Halteabschnitt 52 definiert im Wesentlichen eine rechteckige ebene Fläche, welche in der Fixierstellung an einer Unterseite des Gelenkstabbügels 24 flächig anliegt. In einer Draufsicht auf die Halterung 10 fluchten die in der Längsrichtung L verlaufenden Kanten des ersten Halteabschnitts 50 und des zweiten Halteabschnitts 52.

Aus dem zweiten Halteabschnitt 52 geht ein Lagerungsabschnitt des zweiten Halteabschnitts 52 in Form eines Aufnahmevorsprungs 54 hervor. Der Aufnahmevorsprung 54 weist eine Mulde 55 auf, in welche ein gerader Querabschnitt 57 des Spannbügels 44 in der Fixierstellung eingreift, so dass der Spannbügel 44 an dem Aufnahmevorsprung 54 schwenkbar gehalten ist. Hierdurch ist eine lösbare Schwenkverbindung zwischen dem Spannbügel 44 und dem zweiten Halteabschnitt 52 mit einer dritten Schwenkachse A3 (innerhalb der Mulde 55) gebildet. Die wirksame Länge des Spannbügels 44 erstreckt sich zwischen dem geraden Querabschnitt 57 und dem Achsabschnitt 42 und ist dabei so gewählt, dass in der Fixierstellung der Gelenkstabbügel 24 und damit das Gelenkschloss 12 unbeweglich zwischen dem ersten Halteabschnitt 50 und dem zweiten Halteabschnitt 52 eingeklemmt ist.

Aufgrund des federnden Materials der Halterung 10 weist die Halterung 10 eine Eigenelastizität auf, infolge welcher sich der erste Halteabschnitt 50 (einschließlich des abgewinkelten Lagerungsabschnitts 48) und der zweite Halteabschnitt 52 (einschließlich des Aufnahmevorsprungs 54) relativ zueinander bewegen können. Bei einer solchen Relativbewegung verändert sich ein Winkel zwischen den Halteabschnitten 50, 52 bzw. zwischen Teilen hiervon.

In der in den Figuren gezeigten Fixierstellung des Spannhebels 40 sind die Halteabschnitte 50, 52 gegenüber einer Entnahmestellung näher aneinander angeordnet, wodurch aufgrund der Eigenelastizität des ersten und zweiten Halteabschnitts 50, 52 relativ zueinander eine Kraft auf die aus dem Spannhebel 40, dem Spannbügel 44 und dem Aufnahmevorsprung 54 gebildete Arretiereinrichtung wirkt, die den Spannbügel 44 in die Mulde 55 zieht. Der Kraftpfad ist über den an dem Gelenkschloss 12 anliegenden ersten und zweiten Halteabschnitt 50, 52 geschlossen.

In der gezeigten Fixierstellung befindet sich die zweite Schwenkachse A2 in der Längsrichtung L gemäß Fig. 1 gesehen bezüglich der ersten Schwenkachse A1 auf der dem Gelenkschloss 12 bzw. dem Gelenkstabbügel 24 zugewandten Seite. Eine von dem Spannbügel 44 ausgeübte Haltekraft drückt den Spannhebel 40 somit auf den ersten Halteabschnitt 50.

Um den Spannhebel 40 von dem ersten Halteabschnitt 50 zu lösen, muss diese Haltekraft überwunden werden, wobei die zu überwindende Kraft sich bei einer Bewegung des Spannhebels 40 in die Richtung der Entnahmestellung zunächst erhöht, bis der Spannhebel 40 eine Totpunktstellung erreicht hat. In der Totpunktstellung liegen die erste Schwenkachse A1, die zweite Schwenkachse A2 und die dritte Schwenkachse A3 auf einer Geraden bzw. in einer Ebene. Wird der Spannhebel 40 über die Totpunktstellung hinaus in Richtung der Entnahmestellung bewegt, so wird dabei die zweite Schwenkachse A2 derart versetzt, dass die zweite Schwenkachse A2 in der Längsrichtung L gesehen bezüglich der ersten Schwenkachse A1 auf der dem Gelenkschloss 12 bzw. dem Gelenkstabbügel 24 abgewandten Seite liegt. Ab dem Durchlaufen der Totpunktstellung drängt die aus dem zunehmenden Entspannen der Halterung resultierende Kraft den Spannhebel 40 weiter in Richtung der Entnahmestellung.

In der Entnahmestellung wird auf die Arretiereinrichtung keine Kraft ausgeübt, weshalb sich der Spannbügel 44 aus der Mulde 55 entfernen lässt, um das Gelenkschloss 12 beispielsweise entlang der Längsrichtung L aus der Halterung 10 zu entfernen. Ebenfalls kann das Gelenkschloss 12 entgegen der Querrichtung Q aus der Halterung 10 entnommen werden.

Zu der beschriebenen Spannfunktion der Arretiereinrichtung sei noch angemerkt, dass die genannte Haltekraft, die in der Fixierstellung des Spannhebels 40 auf den ersten und zweiten Halteabschnitt 50, 52 wirkt und beim Durchlaufen der Totpunktstellung des Spannhebels 40 temporär erhöht wird, insbesondere aus einer elastischen Verformung des abgewinkelten Lagerungsabschnitts 48 des ersten Halteabschnitts 50 (relativ zu einem für das Einklemmen des Gelenkschlosses 12 vorgesehenen Anliegeabschnitt des ersten Halteabschnitts 50) resultiert. In einem geringeren Maß kann auch ein entsprechendes Rückfedern des Aufnahmevorsprungs 54 (einschließlich der Mulde 55) vorgesehen sein.

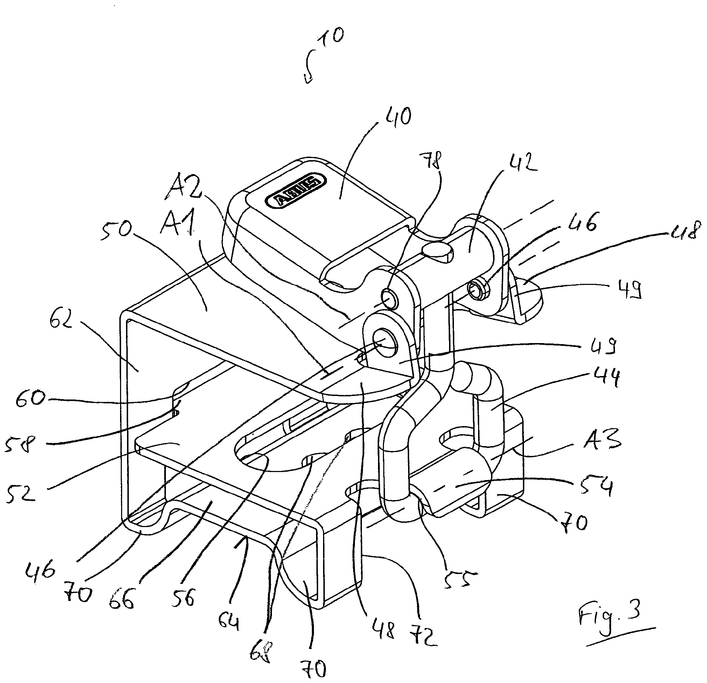

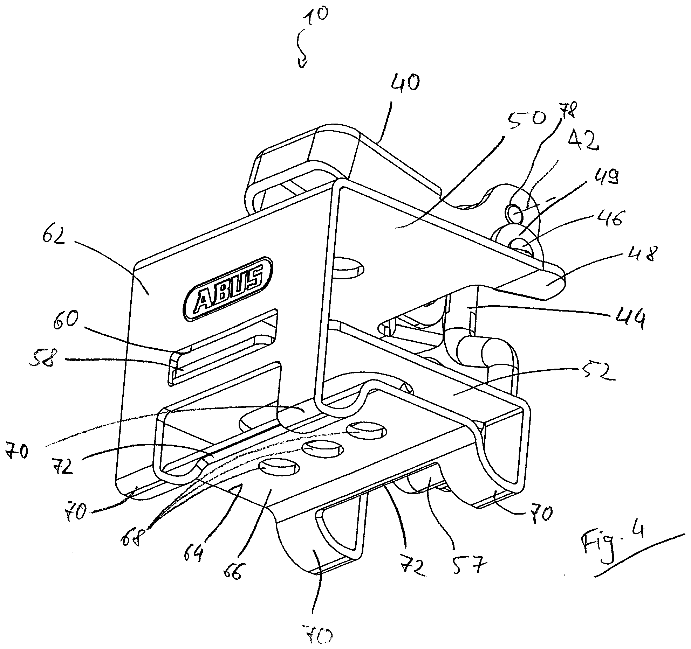

Die Halterung 10 ist unter Bezugnahme auf die Fig. 3 und 4 detaillierter gezeigt. Die Halterung 10 ist beispielsweise aus einem rechteckigen Blech mittels eines Stanz-Biege-Verfahrens hergestellt.

Aus Fig. 3 ist ersichtlich, dass in den zweiten Halteabschnitt 52 eine ovale Aussparung 56 eingebracht ist, die der Gewichtsreduzierung dient. Der zweite Halteabschnitt 52 geht in der dem Aufnahmevorsprung 54 gegenüberliegenden Seite in eine rechteckig geformte Zunge 58 über (Fig. 4). Die Zunge 58 erstreckt sich in eine Aussparung 60 eines Verbindungsabschnitts 62. Die Größe der Aussparung 60 ist so gewählt, dass die Zunge 58 eine Bewegung des zweiten Halteabschnitts 52 auf den ersten Halteabschnitt 50 zu und von dem ersten Halteabschnitt 50 weg gestattet. Durch die auf diese Weise ermöglichte Relativbewegung der Halteabschnitte 50, 52 umfasst die Halterung 10 eine zusätzlich vergrößerte Eigenelastizität.

Der Verbindungsabschnitt 62 geht aus dem ersten Halteabschnitt 50 hervor und ist durch Umbiegen des dem abgewinkelten Lagerungsabschnitt 48 gegenüberliegenden Bereichs des ersten Halteabschnitts 50 erzeugt. Der Verbindungsabschnitt 62 definiert eine ebene Fläche, die zu dem von dem ersten Halteabschnitt 50 und dem zweiten Halteabschnitt 52 definierten Flächen etwa senkrecht verläuft. Von dem Verbindungsabschnitt 62 und den Halteabschnitten 50, 52 wird also eine im Querschnitt U-förmige Aufnahmeöffnung definiert, in die das Gelenkschloss 12 eingeführt werden kann. Der Abstand und der Winkel zwischen den Halteabschnitten 50, 52 in der Ausgangsstellung können derart gewählt sein, dass bereits bei einem (vorzugsweise seitlichen) Einsetzen des Zweirad-Schlosses 12 in die Aufnahmeöffnung (und noch in der Entnahmestellung des Spannhebels 40) von den Halteabschnitten 50, 52 eine Klemmkraft auf das Zweirad-Schloss 12 ausgeübt wird, die das Zweirad-Schloss 12 bis zum Umlegen des Spannhebels 40 in die Fixierstellung gegen ein Herausfallen aus der Halterung vorläufig sichert.

An einem dem ersten Halteabschnitt 50 gegenüberliegenden Ende des Verbindungsabschnitts 62 ist durch Umbiegen des Blechmaterials ein Stützbereich 64 gebildet, der zum Anliegen an einen (nicht gezeigten) Rohrabschnitt eines Zweirads dient. Der Stützbereich 64 umfasst einen zentralen rechteckigen ebenen Bereich 66, in welchen drei Befestigungslöcher 68 eingebracht sind. Die Befestigungslöcher sind mittels eines abgewinkelten Werkzeugs durch die ovale Aussparung 56 erreichbar.

Entlang einer durch die Befestigungslöcher 68 definierten Verlaufsrichtung, welche der Querrichtung Q gemäß Fig. 1 entspricht, sind beidseitig jeweils an den (in Querrichtung Q gesehenen) Enden des Stützbereichs 64 prismenförmige Vorsprünge 70 vorgesehen, wobei in Querrichtung Q gesehen jeweils zwei Vorsprünge 70 miteinander fluchten.

Zwischen zwei fluchtenden Vorsprüngen 70 ist jeweils eine längliche Ausnehmung 72 vorgesehen. Die länglichen Ausnehmungen 72 dienen dazu, eine Befestigung der Halterung 10 mittels eines (nicht gezeigten) Spanngurts oder einer (ebenfalls nicht gezeigten) Schelle zu ermöglichen. Der Spanngurt oder die Schelle kann zwischen dem Stützbereich 64 und dem zweiten Halteabschnitt 52 geführt sein und die zentrale Ebene 66 an den Rahmen eines Zweirads andrücken. Dabei kann der Spanngurt oder die Schelle in den länglichen Ausnehmungen 72 verlaufen.

Auf einer dem Verbindungsabschnitt 62 gegenüberliegenden Seite des Stützbereichs 64 ist das Blechmaterial in einem 90° Winkel umgebogen, wodurch der Stützbereich 64 in den zweiten Halteabschnitt 52 übergeht. Der zweite Halteabschnitt 52 erstreckt sich von dem Übergang aus dem Stützbereich 64 bis in die Aussparung 60.

Abgesehen von dem Spannhebel 40 und dem Spannbügel 44 kann die Halterung 10 vollständig mittels eines Stanz-Biege-Verfahrens aus einem rechteckigen Blech geformt werden. Dabei bildet ein erster Endbereich des Blechs den ersten Halteabschnitt 50 und der gegenüberliegende zweite Endbereich den zweiten Halteabschnitt 52. Von dem ersten Halteabschnitt 50 aus gesehen geht das Blech dann zunächst in den Verbindungsabschnitt 62, anschließend in den Stützbereich 64 und letztlich in den zweiten Halteabschnitt 52 über.

Die Form der Halterung 10 kann dabei durch ein jeweiliges Umbiegen des Blechs geschaffen werden. Vor dem Umbiegen können aus dem Blech die Aussparung 60, die Befestigungslöcher 68 und die ovale Aussparung 56 ausgestanzt werden.

An den beiden einander entgegen gesetzten Stirnseiten (d.h. entlang der Schwenkachsen A1, A2, A3 betrachtet) ist die Halterung 10 offen, wobei die den Stirnseiten zugeordneten Außenkanten von erstem Halteabschnitt 50, Verbindungsabschnitt 62 und zweitem Halteabschnitt 52 in einer jeweiligen Normalebene zu der Achse verlaufen, um welche der erste Halteabschnitt 50, der Verbindungsabschnitt 62 und der zweite Halteabschnitt 52 relativ zueinander abgewinkelt sind. In einer vereinfachten Ausführungsform (insbesondere ohne zusätzlichen Stützbereich 64, nicht dargestellt) ermöglicht dieser Aufbau auch eine kostengünstige Herstellung durch Ablängen eines Strangprofils.

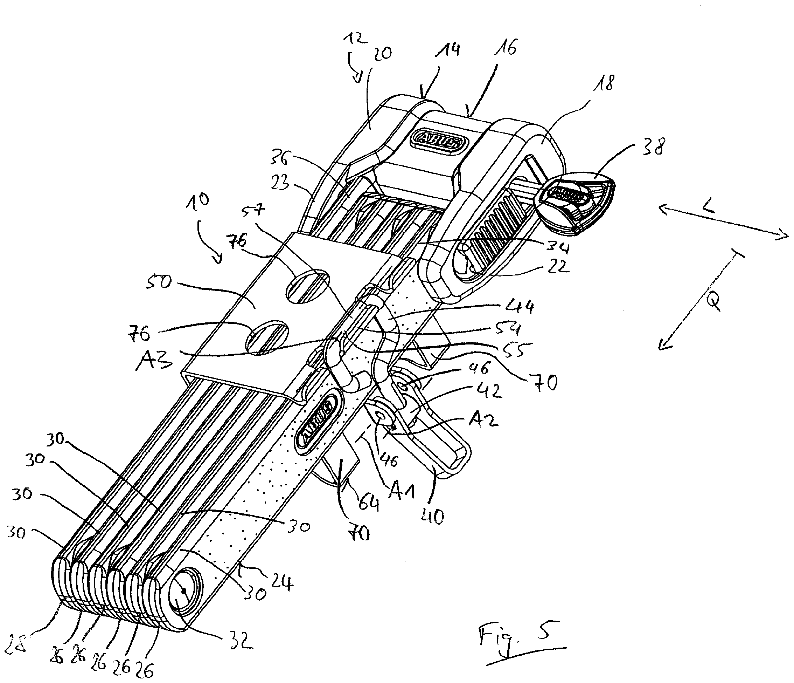

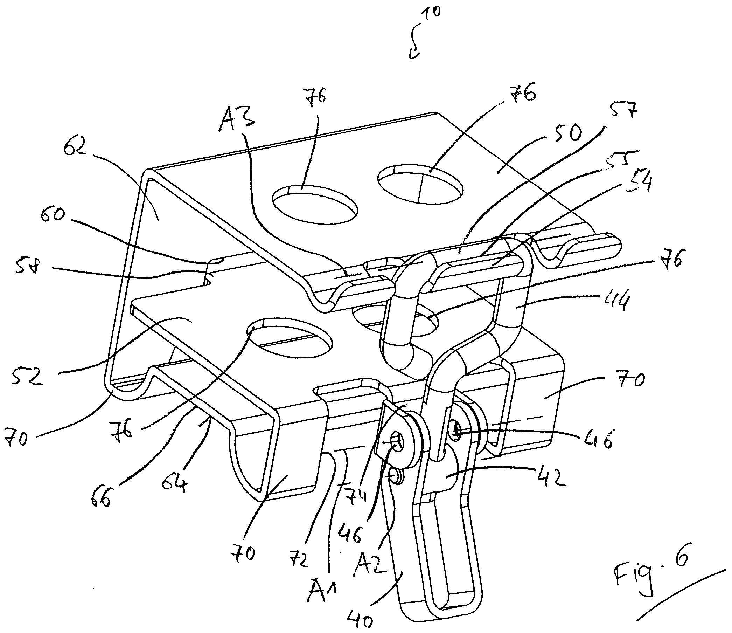

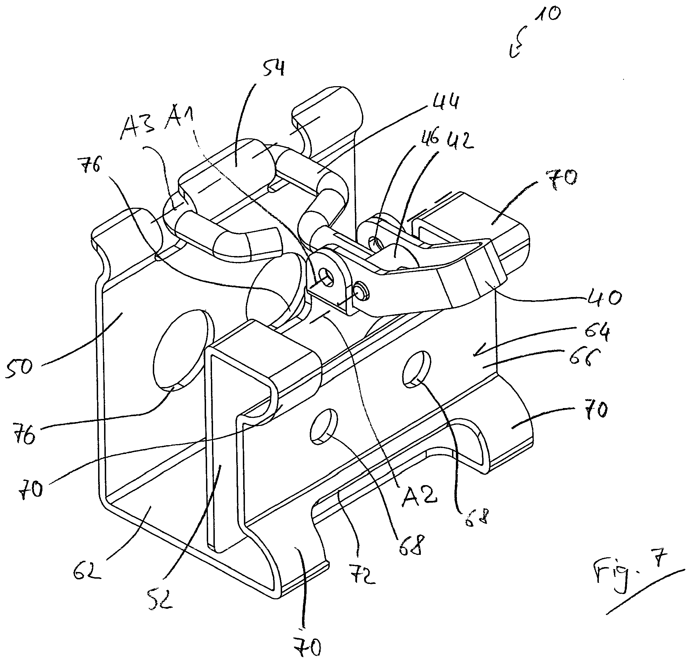

In den Fig. 5 bis 7 ist eine zweite Ausführungsform der Halterung 10 gezeigt. Die zweite Ausführungsform der Halterung 10 unterscheidet sich von der ersten Ausführungsform dadurch, dass der Spannhebel 40 an einer Befestigungszunge 74 (Fig. 6) des zweiten Halteabschnitts angebracht ist und in der in Fig. 5 gezeigten Fixierstellung somit benachbart zu dem (nicht gezeigten) Rohrabschnitt eines Zweirads liegt.

Der Spannbügel 44 greift in der zweiten Ausführungsform in die Mulde des Aufnahmevorsprungs 54 ein, der in dieser Ausführungsform aus dem ersten Halteabschnitt 50 hervorgeht. Zudem weist der Spannhebel 40 eine U-förmige Gestalt auf.

Die Haltekraft zum Einklemmen des Gelenkschlosses 12 zwischen dem ersten und zweiten Halteabschnitt 50, 52 und zum stabilen Halten des Spannhebels 40 in seiner Fixierstellung wird bei dieser Ausführungsform im Wesentlichen durch elastisches Auslenken des Aufnahmevorsprungs 54 (relativ zu dem ersten Halteabschnitt 50) und des zweiten Halteabschnitts 52 (relativ zu dem Stützbereich 64) bewirkt.

Der erste Halteabschnitt 50 und der zweite Halteabschnitt 52 weisen in der zweiten Ausführungsform zwei jeweils miteinander fluchtende konzentrische Aussparungen 76 auf. Durch die fluchtenden konzentrischen Aussparungen 76 ist ein Zugang zu den zwei Befestigungslöchern 68 der zweiten Ausführungsform mittels eines länglichen Werkzeugs möglich.

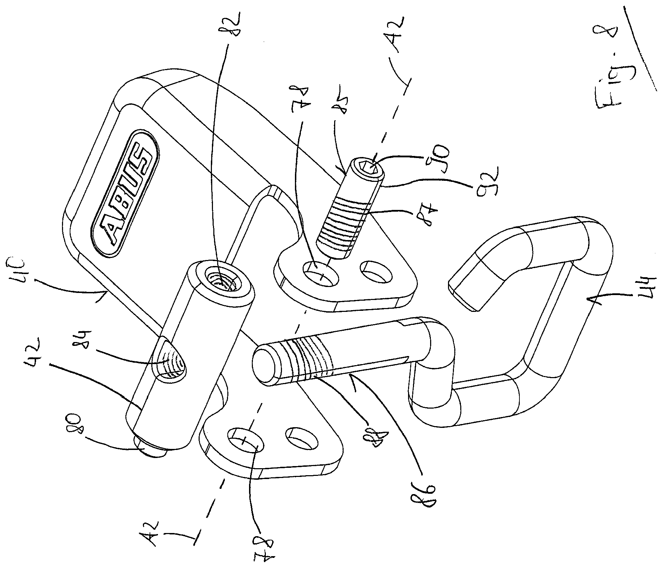

Fig. 8 zeigt in einer Explosionsansicht eine Ausführungsform eines Spannhebels 40, an welchem ein Spannbügel 44 schwenkbar befestigt ist. An dem Spannhebel 40 ist ein Achsabschnitt 42, der durch eine Gewindebuchse gebildet ist, in fluchtenden Löchern 78 des Spannhebels 40 drehbar gelagert. Der Achsabschnitt 42 umfasst an einem ersten axialen Ende einen Lagerzapfen 80. An einem zweiten axialen Ende ist in den Achsabschnitt 42 eine axial verlaufende erste Gewindebohrung 82 eingebracht, die sich bis zu einer zweiten Gewindebohrung 84 erstreckt. Die von den Gewindebohrungen 82, 84 erzeugten Kavitäten gehen ineinander über, weshalb eine Wandung der zweiten Gewindebohrung 84 eine (in Fig. 8 nicht sichtbare) Öffnung umfasst, die einen Durchgang zu der ersten Gewindebohrung 82 bildet. Die zweite Gewindebohrung 84 erstreckt sich senkrecht zu der axialen Erstreckungsrichtung des Achsabschnitts 42 und damit senkrecht zu der ersten Gewindebohrung 82.

Es ist ein Gewindestift 85 vorgesehen, der ein erstes Außengewinde 87 aufweist. Das erste Außengewinde 87 des Gewindestifts 85 wird mit dem Innengewinde der ersten Gewindebohrung 82 verschraubt. Der Gewindestift 85 kann mittels einer Eingriffsmulde 90 mit einem Innensechskantschlüssel gedreht werden.

Der Spannbügel 44 umfasst einen Längsabschnitt 86 mit einem zweiten Außengewinde 88. Das zweite Außengewinde 88 ist mit dem Innengewinde der zweiten Gewindebohrung 84 verschraubt und gestattet es, die wirksame Länge des Spannbügels 44 einzustellen.

Um den Spannbügel 44 in der zweiten Gewindebohrung 84 festzulegen, wird der Gewindestift 85 soweit in die erste Gewindebohrung 82 hineingeschraubt, bis die Befestigungsstellung erreicht ist, in welcher der Gewindestift 85 auf das zweite Außengewinde 88 drückt und dadurch ein Drehen des Spannbügels 44 verhindert. Die wirksame Länge des Spannbügels 44 kann dann nicht mehr unabsichtlich, d.h. ohne Lösen des Gewindestifts 85, verändert werden.

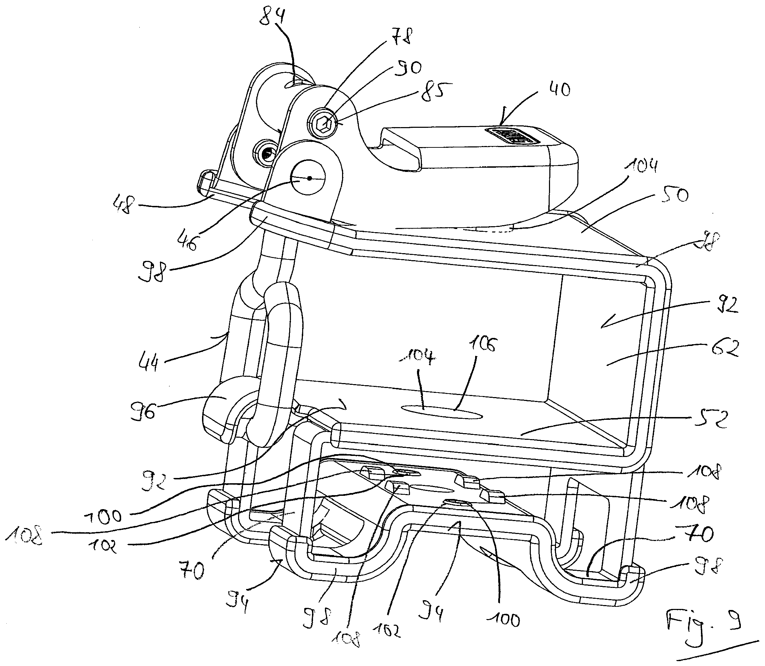

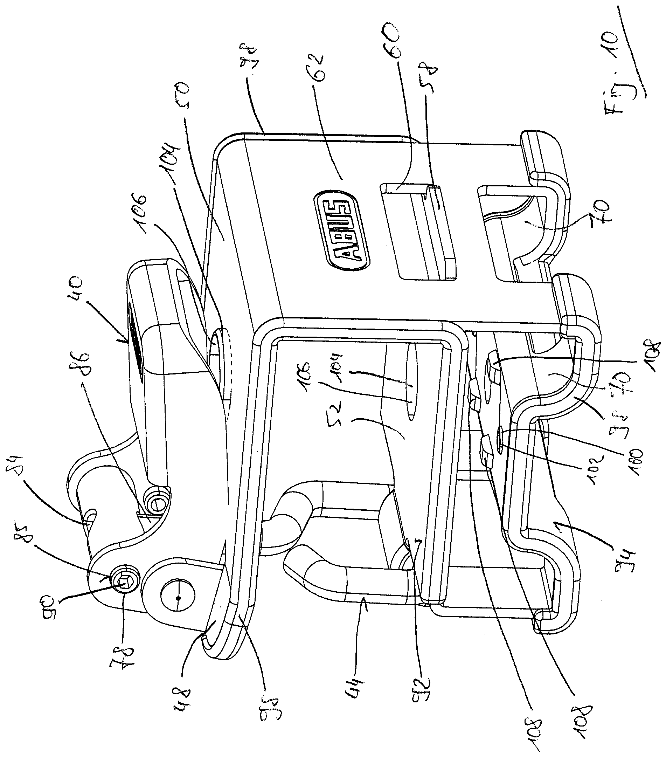

In der Befestigungsstellung ragt ein Lagerabschnitt 92, welcher kein erstes Außengewinde 87 aufweist, aus dem Achsabschnitt 42 hervor. Der Lagerabschnitt 92 und der Lagerzapfen 80 kommen in den fluchtenden Löchern 78 zu liegen (wie dies in den Figuren 9 und 10 gezeigt ist) und ermöglichen so eine Drehung des Achsabschnitts 42 um die zweite Schwenkachse A2.

Fig. 9 und 10 zeigen eine dritte Ausführungsform der Halterung 10. Die dritte Ausführungsform unterscheidet sich von der ersten Ausführungsform im Wesentlichen dadurch, dass ein erstes Schutzelement 92 und ein zweites Schutzelement 94 vorgesehen sind.

Die Schutzelemente 92, 94 sind aus einem Kunststoff geformt und dienen zur Vermeidung von Beschädigungen an dem Gelenkschloss 12 und an einem Rahmen des Zweirads.

Das erste Schutzelement 92 besitzt eine etwa U-förmige Gestalt und bedeckt jeweils die Seite des abgewinkelten Lagerungsabschnitts 48, des ersten Halteabschnitts 50, des Verbindungsabschnitts 62, des zweiten Halteabschnitts 52 sowie (mit einem Vorsprung 96) des Aufnahmevorsprungs 54, die dem Gelenkschloss 12 zugewandt ist.

Das zweite Schutzelement 94 bedeckt den Stützbereich 64 auf derjenigen Seite, die einem Rahmen des Zweirads zugeordnet ist. Das zweite Schutzelement 94 umgreift dabei die prismenförmigen Vorsprünge 70.

Sowohl das erste als auch das zweite Schutzelement 92, 94 umfassen umlaufende Wülste 98, die die Kanten der Halterung 10 umgreifen.

Das zweite Schutzelement 94 umfasst zwei kleine pilzkopfartige Klipselemente 100, die in Bohrungen 102 des Stützbereichs 64 eingreifen, um das zweite Schutzelement 94 an dem Stützbereich 64 zu befestigen (Fig. 9 und 10).

Das erste Schutzelement 92 umfasst zwei große ringförmige Klipselemente 104, die jeweils durch runde Aussparungen 106 in dem ersten Halteabschnitt 50 und dem zweiten Halteabschnitt 52 hindurchragen, um das erste Schutzelement 92 zu befestigen. Das große Klipselement 104, welches das erste Schutzelement 92 an dem ersten Halteabschnitt 50 befestigt ist in Fig. 10 zu erkennen.

Die großen Klipselemente 104 umfassen eine runde Aussparung und gestatten es so, mit einem Werkzeug durch die Halteabschnitte 50, 52 hindurch eine Schraube zur Befestigung der Halterung 10 zu bedienen, deren Schraubenkopf (nicht gezeigt) in dem Zwischenraum zwischen Stützbereich 64 und zweitem Halteabschnitt 52 angeordnet ist.

In den Zwischenraum zwischen Stützbereich 64 und zweitem Halteabschnitt 52 ragen vier Nocken 108 hinein, die aus der zentralen Ebene 66 hervorgehen. Die Nocken 108 bilden die Ecken eines Rechtecks und dienen als Führung für eine Befestigungsschelle (sogenannte Uni-Schelle) oder als Arretierung für ein Befestigungsband (z.B. ein gummiertes Klettband), die jeweils die Halterung 10 an dem Rahmen eines Zweirads befestigen.

Um das Gelenkschloss 12 in der Halterung 10 zu befestigen, wird - unabhängig von der gewählten Ausführungsform - das Gelenkschloss 12 in der (nicht gezeigten) Entnahmestellung des Spannhebels 40 mit seinem Gelenkstabbügel 24 zwischen den ersten Halteabschnitt 50 und den zweiten Halteabschnitt 52 gebracht. Durch Überführen des Spannhebels 40 in die in den Figuren gezeigte Fixierstellung werden der erste Halteabschnitt 50 und der zweite Halteabschnitt 52 mittels des Spannbügels 44 aufeinander zu bewegt, wodurch sich ein Winkel zwischen dem ersten Halteabschnitt 50 und dem zweiten Halteabschnitt 52 verändert. Durch die Relativbewegung aufeinander zu wird der Gelenkstabbügel 24 zwischen dem ersten Halteabschnitt 50 und dem zweiten Halteabschnitt 52 eingeklemmt und damit an der Halterung befestigt.

Bei den drei in Fig. 1 bis 10 gezeigten Ausführungsformen bleibt der Spannbügel 44 stets an dem Spannhebel 40 befestigt, selbst wenn die Arretiereinrichtung geöffnet (d.h. von einem der beiden Halteabschnitte 50, 52 gelöst wird. Es ist alternativ jedoch auch möglich, eine lösbare Schwenkverbindung zwischen dem Spannbügel 44 und dem Spannhebel 40 (d.h. an der Position der zweiten Schwenkachse A2) vorzusehen. Insbesondere kann der Spannhebel 40 an dem ersten Halteabschnitt 50 der Halterung schwenkbar gelagert sein (erste Schwenkachse A1), wobei an dem Spannhebel 40 und dem Spannbügel 44 eine erste und eine zweite Verbindungseinrichtung für eine lösbare Schwenkverbindung vorgesehen sind (beispielsweise ein Vorsprung einerseits und eine zugeordnete Öffnung andererseits), um den Spannbügel 44 wahlweise an dem Spannhebel 40 schwenkbar befestigen zu können (zweite Schwenkachse A2), und wobei der Spannbügel 44 an dem zweiten Halteabschnitt 52 der Halterung schwenkbar gelagert ist (dritte Schwenkachse A3). Auch bei einer derartigen Ausführungsform ist die zweite Schwenkachse A2 bezüglich der ersten Schwenkachse A1 vorzugsweise parallel versetzt, damit bei einem Bewegen des Spannhebels 40 aus der Entnahmestellung in die Fixierstellung die zweite Schwenkachse A2 bezüglich der ersten Schwenkachse A1 eine exzentrische Bewegungsbahn vollzieht und hierdurch eine Totpunktstellung durchlaufen werden kann.

Gemäß einer weiteren Alternative ist es auch möglich, eine lösbare Schwenkverbindung zwischen dem Spannhebel 40 und dem ersten Halteabschnitt 50 der Halterung (d.h. an der Position der ersten Schwenkachse A1) vorzusehen, während der Spannbügel 44 sowohl mit dem Spannhebel 40 (zweite Schwenkachse A2) als auch mit dem zweiten Halteabschnitt 52 der Halterung (dritte Schwenkachse A3) permanent schwenkbar verbunden ist.

### Bezugszeichenliste

- 10: Halterung
- 12: Gelenkschloss
- 14: Schlosskörper
- 16: Gehäuseabschnitt
- 18: erster Endbereich
- 20: zweiter Endbereich
- 22: Befestigungsabschnitt
- 23: Führungsabschnitt
- 24: Gelenkstabbügel
- 26: Gelenkstab
- 28: Schließstab
- 30: Kunststoffmantel
- 32: Niet
- 34: erstes Ende
- 36: zweites Ende
- 38: Schlüssel
- 40: Spannhebel
- 42: Achsabschnitt
- 44: Spannbügel
- 46: drehbare Nieten
- 48: abgewinkelter Lagerungsabschnitt
- 49: senkrechte Umbiegung
- 50: erster Halteabschnitt
- 52: zweiter Halteabschnitt
- 54: Aufnahmevorsprung
- 55: Mulde
- 56: ovale Aussparung
- 57: gerader Querabschnitt des Spannbügels
- 58: Zunge
- 60: Aussparung
- 62: Verbindungsabschnitt
- 64: Stützbereich
- 66: zentrale Ebene
- 68: Befestigungsloch
- 70: prismenförmiger Vorsprung
- 72: längliche Ausnehmung
- 74: Befestigungszunge
- 76: konzentrische Aussparung
- 78: fluchtende Löcher
- 80: Lagerzapfen
- 82: erste Gewindebohrung
- 84: zweite Gewindebohrung
- 85: Gewindestift
- 86: Längsabschnitt
- 87: erstes Außengewinde
- 88: zweites Außengewinde
- 90: Eingriffsmulde
- 92: erstes Schutzelement
- 94: zweites Schutzelement
- 96: Vorsprung
- 98: Wulst
- 100: kleines Klipselement
- 102: Bohrung
- 104: großes Klipselement
- 106: Aussparung
- 108: Nocken

- L: Gehäuseachse
- Q: Querrichtung
- A1: erste Schwenkachse
- A2: zweite Schwenkachse
- A3: dritte Schwenkachse

## Patentansprüche

1. Halterung (10) für ein Zweirad-Schloss (12) mit
einem Stützbereich (64) zum Anliegen an einem Rohrabschnitt eines Zweirads, und
einem Halter, welcher zumindest einen ersten Halteabschnitt (50) und einen zweiten Halteabschnitt (52) umfasst, wobei der erste Halteabschnitt (50) und der zweite Halteabschnitt (52) beabstandet voneinander sind und eine Aufnahmeöffnung für das Zweirad-Schloss definieren, und wobei der erste Halteabschnitt (50) mit dem zweiten Halteabschnitt (52) einen Winkel einschließt, wobei der Winkel zwischen dem ersten Halteabschnitt (50) und dem zweiten Halteabschnitt (52) veränderbar ist, wobei die Halterung (10) eine Arretiereinrichtung aufweist, die zwischen dem ersten Halteabschnitt (50) und dem zweiten Halteabschnitt (52) des Halters wirksam ist und die einen Spannhebel (40) aufweist, der zwischen einer Fixierstellung und einer Entnahmestellung bewegbar ist, wobei durch Bewegen des Spannhebels (40) aus der Entnahmestellung in die Fixierstellung das in der Aufnahmeöffnung befindliche Zweirad-Schloss (12) mittels Klemmung fixierbar ist,
**dadurch gekennzeichnet, dass**
die Arretiereinrichtung einen Spannbügel (44) umfasst, wobei zwischen dem Spannhebel (40) und dem ersten Halteabschnitt (50) des Halters eine erste Schwenkverbindung mit einer ersten Schwenkachse (A1) vorgesehen ist, wobei zwischen dem Spannbügel (44) und dem Spannhebel (40) eine zweite Schwenkverbindung mit einer zweiten Schwenkachse (A2) vorgesehen ist, und wobei zwischen dem Spannbügel (44) und dem zweiten Halteabschnitt (52) des Halters eine dritte Schwenkverbindung mit einer dritten Schwenkachse (A3) vorgesehen ist, wobei wenigstens eine der Schwenkverbindungen lösbar ist und eine erste Verbindungseinrichtung (57) und eine zweite Verbindungseinrichtung (54) aufweist.

2. Halterung (10) nach Anspruch 1,
wobei der Spannbügel (44) zwischen der zweiten Schwenkachse (A2) und der dritten Schwenkachse (A3) eine wirksame Länge aufweist, die verstellbar ist.

3. Halterung (10) nach Anspruch 2,
wobei ein Verstellen der wirksamen Länge des Spannbügels (44) mittels eines Feststellmittels wahlweise unterbindbar ist.

4. Halterung (10) nach Anspruch 3,
wobei das Feststellmittel um die zweite Schwenkachse (A2) drehbar angeordnet ist und/oder das Feststellmittel Bestandteil eines Lagersitzes der zweiten Schwenkachse (A2) ist;
und/oder
wobei das Feststellmittel einen Gewindestift (85) umfasst, der sich axial entlang der zweiten Schwenkachse (A2) erstreckt, und wobei ein erstes axiales Ende des Gewindestifts (85) wahlweise eine Kraft auf den Spannbügel (44) ausübt.

5. Halterung (10) nach einem der Ansprüche 1 bis 4,
wobei der Spannbügel (44) mittels eines Spannelements zumindest in der Entnahmestellung von dem ersten oder zweiten Halteabschnitt (50, 52) weggedrängt wird.

6. Halterung (10) nach zumindest einem der Ansprüche 1 bis 5,
wobei in einer Totpunktstellung der Arretiereinrichtung die zweite Schwenkachse (A2) auf einer Geraden liegt, die durch die dritte Schwenkachse (A3) und die erste Schwenkachse (A1) verläuft.

7. Halterung (10) nach zumindest einem der vorstehenden Ansprüche,
wobei die Halterung (10) wenigstens eine Elastizität aufweist, die, wenn ein Zweirad-Schloss (12) in die Aufnahmeöffnung eingesetzt ist und der Spannhebel (40) in die Fixierstellung bewegt ist, gespannt ist und hierdurch zum einen eine Haltekraft auf das Zweirad-Schloss (12) ausübt und zum anderen den Spannhebel (40) in der Fixierstellung stabilisiert, wobei die Elastizität dazu angepasst ist, durch Bewegen der Arretiereinrichtung in Richtung einer bzw. der Totpunktstellung zunehmend gespannt zu werden und nach Durchlaufen der Totpunktstellung zunehmend zu entspannen.

8. Halterung (10) nach Anspruch 7,
wobei die Elastizität durch eine Eigenelastizität zumindest eines Teils des ersten Halteabschnitts (50) und/oder des zweiten Halteabschnitts (52) des Halters gebildet ist, und/oder wobei die Elastizität durch eine elastische Auflage an dem ersten Halteabschnitt (50) und/oder dem zweiten Halteabschnitt (52) des Halters gebildet ist.

9. Halterung (10) nach Anspruch 8,
wobei der erste Halteabschnitt (50) und/oder der zweite Halteabschnitt (52) des Halters einen rückfedernden Lagerungsabschnitt (48, 54) aufweist, an dem ein Teil der Arretiereinrichtung gelagert ist und der beim Durchlaufen der Totpunktstellung der Arretiereinrichtung temporär auslenkbar ist.

10. Halterung (10) nach zumindest einem der vorstehenden Ansprüche,
wobei das Zweirad-Schloss (12) allein mittels Klemmung zwischen dem ersten Halteabschnitt (50) und dem zweiten Halteabschnitt (52) an dem Halter befestigbar ist.

11. Halterung (10) nach zumindest einem der vorstehenden Ansprüche,
wobei der erste Halteabschnitt (50) und der zweite Halteabschnitt (52) mittels eines Verbindungsabschnitts (62) verbunden sind, wobei der erste Halteabschnitt (50), der Verbindungsabschnitt (62) und der zweite Halteabschnitt (52) gemeinsam eine C- oder U-förmige Gestalt bilden;
wobei in der Entnahmestellung des Spannhebels (40) das Zweirad-Schloss (12) in die Aufnahmeöffnung einsetzbar ist.

12. Halterung (10) nach zumindest einem der Ansprüche 1 bis 10,
wobei auf dem ersten Halteabschnitt (50) und/oder dem zweiten Halteabschnitt (52) und/oder einem Verbindungsabschnitt (62) des Halters, welcher den ersten Halteabschnitt (50) und den zweiten Halteabschnitt (52) verbindet, und/oder auf dem Stützbereich (64) jeweils zumindest bereichsweise ein Schutzelement (92, 94) zum Anliegen an dem Zweirad-Schloss (12) angeordnet ist.

13. Zweirad-Schloss (12) mit einer Halterung (10) nach einem der vorstehenden Ansprüche.

14. Zweirad-Schloss (12) nach Anspruch 13,
wobei das Zweirad-Schloss (12) und die Halterung (10) dazu angepasst sind, dass das Zweirad-Schloss (12) bereits in der Entnahmestellung des Spannhebels (40) unter Ausbildung eines Klemmsitzes in der Aufnahmeöffnung aufnehmbar ist;
und/oder
wobei das Zweirad-Schloss (12) und die Halterung (10) dazu angepasst sind, dass das Zweirad-Schloss (12) in der Aufnahmeöffnung formschlüssig aufnehmbar ist;
und/oder
wobei das Zweirad-Schloss (12) und die Halterung (10) dazu angepasst sind, dass durch das Bewegen des Spannhebels (40) aus der Entnahmestellung in die Fixierstellung das in der Aufnahmeöffnung befindliche Zweirad-Schloss (12) derart kraftschlüssig fixierbar ist, dass einzelne Bestandteile (26, 28) des Zweirad-Schlosses (12) relativ zueinander fixiert werden.

## Claims

1. A holder (10) for a two-wheeler lock (12) comprising
a support region (64) for contacting a tube section of a two-wheeler; and
a mount which comprises at least one first holding section (50) and one second holding section (52), wherein the first holding section (50) and the second holding section (52) are spaced apart from one another and define a reception opening for the two-wheeler lock, and wherein the first holding section (50) includes an angle with the second holding section (52), wherein the angle between the first holding section (50) and the second holding section (52) is variable, with the holder (10) having a locking device which is effective between the first holding section (50) and the second holding section (52) of the mount and which has a clamping lever (40) which is movable between a fixing position and a removal position, with the two-wheeler lock (12) located in the reception opening being fixable by means of clamping by movement of the clamping lever (40) out of the removal position into the fixing position,
**characterized in that**
the locking device comprises a clamping hoop (44), with a first pivotal connection having a first pivot axis (A1) being provided between the clamping lever (40) and the first holding section (50) of the mount, with a second pivotal connection having a second pivot axis (A2) being provided between the clamping hoop (44) and the clamping lever (40), and with a third pivotal connection having a third pivot axis (A3) being provided between the clamping hoop (44) and the second holding section (52) of the mount, with at least one of the pivotal connections being releasable and having a first connection device (57) and a second connection device (54).

2. A holder (10) in accordance with claim 1,
wherein the clamping hoop (44) has an effective length between the second pivot axis (A2) and the third pivot axis (A3), the effective length being adjustable.

3. A holder (10) in accordance with claim 2,
wherein an adjustment of the effective length of the clamping hoop (44) can be selectively suppressed by means of a fixing means.

4. A holder (10) in accordance with claim 3,
wherein the fixing means is arranged rotatable about the second pivot axis (A2) and/or the fixing means is a component of a bearing seat of the second pivot axis (A2);
and/or
wherein the fixing means comprises a threaded pin (85) which extends axially along the second pivot axis (A2); and wherein a first axial end of the threaded pin (85) selectively exerts a force on the clamping hoop (44).

5. A holder (10) in accordance with any one of the claims 1 to 4,
wherein the clamping hoop (44) is urged away from the first or second holding section (50, 52) by means of a clamping element at least in the removal position.

6. A holder (10) in accordance with at least one of the claims 1 to 5,
wherein the second pivot axis (A2) lies, in a dead center position of the locking device, on a straight line which extends through the third pivot axis (A3) and through the first pivot axis (A1).

7. A holder (10) in accordance with at least one of the preceding claims,
wherein the holder (10) at least has an elasticity which is tensioned when a two-wheeler lock (12) is inserted into the reception opening and the clamping lever (40) is moved into the fixing position, and which hereby exerts a holding force on the two-wheeler lock (12), on the one hand, and stabilizes the clamping lever (40) in the fixing position, on the other hand; and wherein the elasticity is adapted to be increasingly tensioned by movement of the locking device in the direction of a or the dead center position and to be increasingly relaxed after passing through the dead center position.

8. A holder (10) in accordance with claim 7,
wherein the elasticity is formed by an inherent elasticity of at least a part of the first holding section (50) and/or of the second holding section (52) of the mount; and/or wherein the elasticity is formed by an elastic support at the first holding section (50) and/or at the second holding section (52) of the mount.

9. A holder (10) in accordance with claim 8,
wherein the first holding section (50) and/or the second holding section (52) of the mount has/have a resilient support section (48, 54) at which a part of the locking device is supported and which is temporarily deflectable on passing through the dead center position of the locking device.

10. A holder (10) in accordance with at least one of the preceding claims,
wherein the two-wheeler lock (12) is fastenable to the mount solely by means of clamping between the first holding section (50) and the second holding section (52).

11. A holder (10) in accordance with at least one of the preceding claims,
wherein the first holding section (50) and the second holding section (52) are connected by means of a connection section (62), with the first holding section (50), the connection section (62) and the second holding section (52) together forming a C-shaped design or a U-shaped design; and wherein the two-wheeler lock (12) can be inserted into the reception opening in the removal position of the clamping lever (40).

12. A holder (10) in accordance with at least one of the claims 1 to 10,
wherein a respective protective element (92, 94) is arranged at least regionally for contacting the two-wheeler lock (12) on the first holding section (50) and/or on the second holding section (52) and/or on a connection section (62) of the mount, which connects the first holding section (50) and the second holding section (52), and/or on the support region (64).

13. A two-wheeler lock (12) having a holder (10) in accordance with any one of the preceding claims.

14. A two-wheeler lock (12) in accordance with claim 13,
wherein the two-wheeler lock (12) and the holder (10) are adapted such that the two-wheeler lock (12) can already be received in the removal position of the clamping lever (40) while forming a clamping seat in the reception opening;
and/or
wherein the two-wheeler lock (12) and the holder (10) are adapted such that the two-wheeler lock (12) can be received in a shape-matched manner in the reception opening;
and/or
wherein the two-wheeler lock (12) and the holder (10) are adapted such that the two-wheeler lock (12) located in the reception opening can be fixed in a force-transmitting manner by the movement of the clamping lever (40) out of the removal position into the fixing position such that individual components (26, 28) of the two-wheeler lock (12) are fixed relative to one another.

## Revendications

1. Monture (10) pour un antivol de deux-roues (12), comportant une zone d'appui (64) pour venir en appui contre une portion tubulaire d'un deux-roues, et
un élément de retenue qui comprend au moins une première portion de retenue (50) et une seconde portion de retenue (52),
dans laquelle
la première portion de retenue (50) et la seconde portion de retenue (52) sont espacées l'une de l'autre et définissent une ouverture de logement pour l'antivol de deux-roues,
la première portion de retenue (50) définit un angle avec la seconde portion de retenue (52),
l'angle entre la première portion de retenue (50) et la seconde portion de retenue (52) est variable,
la monture (10) comprend un moyen d'arrêt qui agit entre la première portion de retenue (50) et la seconde portion de retenue (52) d'élément de retenue et qui comprend un levier de serrage (40) qui est mobile entre une position de fixation et une position de prélèvement,
par déplacement du levier de serrage (40) depuis la position de prélèvement jusque dans la position de fixation, l'antivol de deux-roues (12) situé dans l'ouverture de logement peut être fixé par coincement, **caractérisée en ce que**
le moyen d'arrêt comprend un étrier de serrage (44),
une première liaison de pivotement ayant un premier axe de pivotement (A1) est prévue entre le levier de serrage (40) et la première portion de retenue (50) d'élément de retenue,
une seconde liaison de pivotement ayant un second axe de pivotement (A2) est prévue entre l'étrier de serrage (44) et le levier de serrage (40), et une troisième liaison de pivotement ayant un troisième axe de pivotement (A3) est prévue entre l'étrier de serrage (44) et la seconde portion de retenue (52) de l'élément de retenue,
l'une au moins des liaisons de pivotement est détachable et comprend un premier moyen de liaison (57) et un second moyen de liaison (54).

2. Monture (10) selon la revendication 1,
dans laquelle
entre le second axe de pivotement (A2) et le troisième axe de pivotement (A3), l'étrier de serrage (44) présente une longueur efficace qui est réglable.

3. Monture (10) selon la revendication 2,
dans laquelle
un réglage de la longueur efficace de l'étrier de serrage (44) peut au choix être empêché à l'aide d'un moyen d'immobilisation.

4. Monture (10) selon la revendication 3,
dans laquelle
le moyen d'immobilisation est agencé mobile en rotation autour du second axe de pivotement (A2) et/ou le moyen d'immobilisation fait partie d'un siège de palier du second axe de pivotement (A2) ;
et/ou
le moyen d'immobilisation comprend une tige filetée (85) qui s'étend axialement le long du second axe de pivotement (A2), une première extrémité axiale de la tige filetée (85) exerçant au choix une force sur l'étrier de serrage (44).

5. Monture (10) selon l'une des revendications 1 à 4,
dans laquelle
l'étrier de serrage (44) est repoussé en éloignement de la première ou de la seconde portion de retenue (50, 52) au moyen d'un élément de serrage, au moins dans la position de prélèvement.

6. Monture (10) selon l'une des revendications 1 à 5,
dans laquelle
dans une position de point mort du moyen d'arrêt, le second axe de pivotement (A2) se situe sur une droite qui passe par le troisième axe de pivotement (A3) et par le premier axe de pivotement (A1).

7. Monture (10) selon l'une au moins des revendications précédentes,
dans laquelle
la monture (10) présente au moins une élasticité qui, lorsqu'un antivol de deux-roues (12) est mis en place dans l'ouverture de logement et que le levier de serrage (40) est déplacé jusque dans la position de fixation, est tendue et exerce ainsi d'une part une force de retenue sur l'antivol de deux-roues (12) et stabilise d'autre part le levier de serrage (40) dans la position de fixation, l'élasticité étant adaptée à se tendre de plus en plus par déplacement du moyen d'arrêt en direction d'une ou de la position de point mort et à se détendre de plus en plus après avoir passé la position de point mort.

8. Monture (10) selon la revendication 7,
dans laquelle
l'élasticité est formée par une élasticité propre d'une partie au moins de la première portion de retenue (50) et/ou de la seconde portion de retenue (52) de l'élément de retenue, et/ou
l'élasticité est formée par un revêtement élastique sur la première portion de retenue (50) et/ou sur la seconde portion de retenue (52) de l'élément de retenue.

9. Monture (10) selon la revendication 8,
dans laquelle
la première portion de retenue (50) et/ou la seconde portion de retenue (52) de l'élément de retenue comprend une portion de montage (48, 54) à effet ressort sur laquelle est montée une partie du moyen d'arrêt et qui, lors du passage de la position de point mort du moyen d'arrêt, peut dévier temporairement.

10. Monture (10) selon l'une au moins des revendications précédentes,
dans laquelle
l'antivol de deux-roues (12) est susceptible d'être fixé sur l'élément de retenue par le seul coincement entre la première portion de retenue (50) et la seconde portion de retenue (52).

11. Monture (10) selon l'une au moins des revendications précédentes,
dans laquelle
la première portion de retenue (50) et la seconde portion de retenue (52) sont reliées par une portion de liaison (62), la première portion de retenue (50), la portion de liaison (62) et la seconde portion de retenue (52) formant conjointement une configuration en forme de C ou de U ;
dans la position de prélèvement du levier de serrage (40), l'antivol de deux-roues (12) peut être mis en place dans l'ouverture de logement.

12. Monture (10) selon l'une au moins des revendications 1 à 10,
dans laquelle
un élément de protection (92, 94) respectif pour l'appui contre l'antivol de deux-roues (12) est agencé au moins localement sur la première portion de retenue (50) et/ou sur la seconde portion de retenue (52) et/ou sur une portion de liaison (62) de l'élément de retenue qui relie la première portion de retenue (50) et la seconde portion de retenue (52), et/ou sur la zone d'appui (64).

13. Antivol de deux-roues (12) pourvu d'une monture (10) selon l'une des revendications précédentes.

14. Antivol de deux-roues (12) selon la revendication 13,
dans lequel
l'antivol de deux-roues (12) et la monture (10) sont adaptés pour que l'antivol de deux-roues (12) puisse être logé dans l'ouverture de logement par formation d'un ajustement serré déjà dans la position de prélèvement du levier de serrage (40) ;
et/ou
l'antivol de deux-roues (12) et la monture (10) sont adaptés pour que l'antivol de deux-roues (12) puisse être logé par coopération de formes dans l'ouverture de logement ;
et/ou
l'antivol de deux-roues (12) et la monture (10) sont adaptés pour que l'antivol de deux-roues (12) situé dans l'ouverture de logement puisse être fixé par coopération de forces, par déplacement du levier de serrage (40) depuis la position de prélèvement jusque dans la position de fixation, de telle sorte que des composants individuels (26, 28) de l'antivol de deux-roues (12) sont fixés les uns par rapport aux autres.
